(19) Europäisches Patentamt / European Patent Office / Office européen des brevets

(11) EP 3 807 252 B1

(12) # EUROPEAN PATENT SPECIFICATION

(45) Date of publication and mention of the grant of the patent:
**12.11.2025 Bulletin 2025/46**

(21) Application number: **19823336.3**

(22) Date of filing: **18.06.2019**

(51) International Patent Classification (IPC):
***A01N 59/00*** *(2006.01)* ***C08F 220/60*** *(2006.01)*
***C09D 133/24*** *(2006.01)* ***A01N 43/50*** *(2006.01)*

(52) Cooperative Patent Classification (CPC):
(C-Sets available)
**C08F 220/603; A01N 43/50; A01N 59/00; C09D 133/24** (Cont.)

(86) International application number:
**PCT/US2019/037767**

(87) International publication number:
**WO 2019/246123 (26.12.2019 Gazette 2019/52)**

(54) **SYSTEMS AND METHODS FOR N-HALAMINE-DOPAMINE COPOLYMERS FOR HIGH-PERFORMANCE, LOW-COST, AND EASY-TO-APPLY ANTIMICROBIAL COATINGS**

SYSTEME UND VERFAHREN FÜR N-HALAMIN-DOPAMIN-COPOLYMERE FÜR LEISTUNGSFÄHIGE, KOSTENGÜNSTIGE UND LEICHT ANZUWENDENDE ANTIMIKROBIELLE BESCHICHTUNGEN

SYSTÈMES ET PROCÉDÉS DESTINÉS À DES COPOLYMÈRES N-HALAMINE-DOPAMINE POUR REVÊTEMENTS ANTIMICROBIENS À HAUTE PERFORMANCE, À FAIBLE COÛT ET FACILES À APPLIQUER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2018 US 201862686318 P**

(43) Date of publication of application:
**21.04.2021 Bulletin 2021/16**

(73) Proprietor: **Cornell University**
**Ithaca, NY 14850 (US)**

(72) Inventors:
- **MA, Minglin**
  **Ithaca, NY 14850 (US)**
- **WOROBO, Randy**
  **Geneva, NY 14456 (US)**
- **QIAO, Mingyu**
  **Ithaca, NY 14850 (US)**

(74) Representative: **Potter Clarkson**
**Chapel Quarter**
**Mount Street**
**Nottingham NG1 6HQ (GB)**

(56) References cited:
**WO-A1-2015/083360** **CA-A1- 2 948 357**
**US-A1- 2003 044 376** **US-A1- 2011 076 504**
**US-A1- 2012 183 494** **US-A1- 2015 166 796**
**US-A1- 2018 105 618** **US-B2- 7 173 073**

- **S D WORLEY ET AL: "N-HALAMINE POLYMERS FOR ANTIMICROBIAL MATERIALS", POLYMER PREPRINTS, 1 January 2011 (2011-01-01), pages 1038 - 1039, XP055118791, Retrieved from the Internet <URL:http://library.sut.ac.th:8080/ACS/V52N02Y2011/files/558_89555.pdf> [retrieved on 20140519]**
- **QIAO ET AL.: "Scalable and Rechargeable Antimicrobial Coating for Food Safety Applications", JOURNAL OF AGRICULTURAL AND FOOD CHEMISTRY, vol. 66, no. 43, 8 October 2018 (2018-10-08), pages 11441 - 11450, XP055665496**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**A01N 43/50, A01N 25/10, A01N 25/24, A01N 25/34;**
**A01N 59/00, A01N 25/10, A01N 25/24, A01N 25/34, A01N 43/50;**
**C08F 220/603, C08F 220/58**

## Description

This invention was made with government support under Hatch 2017-18-107 awarded by the United States Department of Agriculture. The government has certain rights in the invention.

## FIELD

The present application relates to N-halamine-dopamine copolymers and the use of these copolymers for antimicrobial coatings.

## BACKGROUND

Foodbome illness is a major burden to both public health and the profitability of the food industry in the United States. The US Center for Disease Control and Prevention (CDC) estimates that each year in the United States foodborne diseases result in about 48 million sicknesses, 128,000 hospitalizations and 3,000 deaths (Scallan et al., "Foodborne Illness Acquired in the United States - Major Pathogens," Emerging Infectious Diseases 17(1):7-15 (2011)). The total economic loss was estimated as $15.6 billion by the US Department of Agriculture (USDA) (USDA Economic Analyses of Economic Issues That Affect the Safety of the U.S. Food Supply, 2017). The majority (> 91%) of current foodbome illnesses are caused by consuming foods contaminated with harmful microorganisms such as fungi, bacteria, virus, etc. (Scallan et al., "Foodborne Illness Acquired in the United States - Major Pathogens," Emerging Infectious Diseases 17(1):7-15 (2011)). Foodbome pathogens also contribute significantly to the increasing food recalls in the food industry: almost half of these recalls are due to microbiological contamination. On average, about $10 million in direct costs are associated with a single recall of a food product, not including brand damage and lost sales (Tyco Integrated Security, "Recall: The Food Industry's Biggest Threat To Profitability," Food Safety Magazine, (2012)). Therefore, there is a need for novel strategies to reduce microbial contamination of food products.

Microbial contamination can occur at multiple stages of the food production process including production itself, processing, distribution, and preparation (Larsen et al., "Persistence of Foodbome Pathogens and Their Control in Primary and Secondary Food Production Chains," Food Control 44:92-109 (2014); Muhterem-Uyar et al., "Environmental Sampling for Listeria Monocytogenes Control in Food Processing Facilities Reveals Three Contamination Scenarios," Food Control 51:94-107 (2015); Gorman et al., "A Study of Cross-Contamination of Food-Borne Pathogens in the Domestic Kitchen in the Republic of Ireland," International Journal of Food Microbiology 76(1-2):143-150 (2002); Kaneko et al., "Bacterial Contamination in the Environment of Food Factories Processing Ready-to-Eat Fresh Vegetables," Journal of Food Protection 62(7):800-804 (1999); Carrasco et al., "Cross-Contamination and Recontamination by Salmonella in Foods: A Review," Food Research International 45(2):545-556 (2012)). Since bacteria (e.g., *Pseudomonas, Listeria monocytogenes, Salmonella, etc.*) can attach and colonize on solid surfaces, if not eliminated in a timely manner they can quickly proliferate and form biofilms (Ryu et al., "Biofilm Formation by Escherichia Coli O157:H7 on Stainless Steel: Effect of Exopolysaccharide and Curli Production on its Resistance to Chlorine," Applied and Environmental Microbiology 71(1):247-254 (2005)). Mature biofilms are resistant to common sanitation treatments including aggressive sanitizing/cleaning agents, and are thus notoriously difficult to remove (Corcoran et al., "Commonly Used Disinfectants Fail to Eradicate Salmonella Enterica Biofilms from Food Contact Surface Materials," Applied and Environmental Microbiology 80(4):1507-1514 (2014)). The bacteria embedded in the biofilm are a potential source for cross-contamination for any food product that comes in contact with the afflicted surface during processing (Faille et al., "Sporulation of Bacillus spp. Within Biofilms: A Potential Source of Contamination in Food Processing Environments," Food Microbiology 40:64-74 (2014); Kumar et al., "Significance of Microbial Biofilms in Food Industry: A Review," International Journal of Food Microbiology 42(1):9-27 (1998); Brooks et al., "Biofilms in the Food Industry: Problems and Potential Solutions," International Journal of Food Science & Technology 43(12):2163-2176 (2008)). In addition, surfaces that do not have direct contact with food including machinery parts, floors, ceilings, walls, and sewage systems can also introduce contamination into food products via indirect routes (Muhterem-Uyar et al., "Environmental Sampling for Listeria Monocytogenes Control in Food Processing Facilities Reveals Three Contamination Scenarios," Food Control 51:94-107 (2015)). To avoid such contamination, it is important to continuously prevent bacterial attachment and growth, not simply kill bacteria during sanitation procedures.

In recent years, there have been several efforts to develop novel surface sanitizing technologies such as electrolyzed water (Zhang et al., "Development of a Portable Electrolytic Sanitizing Unit for the Production of Neutral Electrolysed Water," LWT - Food Science and Technology, 82:207-215 (2017)), or a combination with physical treatment such as ultrasound (Zhao et al., "Efficacy of Low Concentration Neutralised Electrolysed Water and Ultrasound Combination for Inactivating Escherichia Coli ATCC 25922, Pichia Pastoris GS115 and Aureobasidium Pullulans 2012 on Stainless Steel Coupons," Food Control 73:889-899 (2017)). However, these methods provide a reactive method rather than a proactive method for removing biofilm and preventing microbial cross-contamination on hard

surfaces. Antimicrobial coatings provide one means to continuously resist bacterial contamination of surfaces, and, thus, can be used as a preventive control method. Antimicrobial coatings for food equipment have been extensively reviewed in Bastarrachea et al., "Antimicrobial Food Equipment Coatings: Applications and Challenges," Annual Review of Food Science and Technology 6(1):97-118 (2015). However, very few of the technologies developed to date can be easily translatable from the laboratory to the food industry in the near future due to the high-cost of materials, compromised biocidal functions in food associated environment, or challenges in the process of scaling up. For instance, silver-based antimicrobial coating has been commercially available, however it is limited by high cost and ineffectiveness in food manufacturing environment due to fouling from organic load, and antimicrobial resistance (Belluco et al., "Silver as Antibacterial Toward Listeria Monocytogenes," Frontiers in Microbiology 7:307 (2016); Chaitiemwong et al., "Survival of Listeria Monocytogenes on a Conveyor Belt Material With or Without Antimicrobial Additives," International Journal of Food Microbiology 142(1):260-263 (2010)).

In recent years, N-halamine antimicrobial chemistry has attracted a great deal of interest due to its potent and broad biocidal function, low-cost, and low-toxicity (Dong et al., "Chemical Insights into Antibacterial N-Halamines," Chemical Reviews 117(6):4806-4862 (2017)). N-halamines are a group of compounds that contain a nitrogen-halogen bond formed through halogenation of a nitrogen-hydrogen bond, and chlorine-based N-halamine is the most widely researched. The antimicrobial mechanism of N-halamine is similar to that of other chlorine-based compounds such as hypochlorite; however the difference is that the chlorine is fixed in the molecule through covalent bonding (Zhao et al., "Efficacy of Low Concentration Neutralised Electrolysed Water and Ultrasound Combination for Inactivating Escherichia Coli ATCC 25922, Pichia Pastoris GS115 and Aureobasidium Pullulans 2012 on Stainless Steel Coupons," Food Control 73:889-899 (2017)). Previously, N-halamines have been intensively researched for broad applications including water treatments, textiles, biomedical devices, and so on (Bastarrachea et al., "Antimicrobial Food Equipment Coatings: Applications and Challenges," Annual Review of Food Science and Technology 6(1):97-118 (2015); Dong et al., "Chemical Insights into Antibacterial N-Halamines," Chemical Reviews 117(6):4806-4862 (2017); Hui et al., "Antimicrobial N-Halamine Polymers and Coatings: A Review of Their Synthesis, Characterization, and Applications," Biomacromolecules 14(3):585-601 (2013)). US 2003/044376 describes *N*-halamine biocidal coatings and materials produced from the homopolymerization or copolymerization of monomeric oxazolidinones or hydantoins with other monomers which become biocidal upon exposure to solutions of chlorine or bromine. There have been some previous reports of *N*-halamine coatings on materials that are commonly used in food manufacturing such as stainless steel (Demir et al., "Polymeric Antimicrobial N-Halamine-Surface Modification of Stainless Steel," Industrial & Engineering Chemistry Research 56(41):11773-11781 (2017); Bastarrachea et al., "Development of Antimicrobial Stainless Steel via Surface Modification With N-Halamines: Characterization of Surface Chemistry and N-Halamine Chlorination," Journal of Applied Polymer Science 127(1):821-831 (2013)), plastics (Bastarrachea et al., "Antimicrobial Coatings with Dual Cationic and N-Halamine Character: Characterization and Biocidal Efficacy," Journal of Agricultural and Food Chemistry 63(16):4243-4251 (2015); Qiao et al., "N-Halamine Modified Thermoplastic Polyurethane with Rechargeable Antimicrobial Function for Food Contact Surface," RSC Advances 7(3):1233-1240 (2017)), paints (Kocer et al., "N-Halamine Copolymers for Use in Antimicrobial Paints," ACS Applied Materials & Interfaces 3(8):3189-3194 (2011)), and so on. However, the fabrication methods used in these previous studies are either high-cost or require complex surface pretreatments, lengthy and costly coating procedures, or cost prohibitive quantities of *N*-halamine polymers.

The present disclosure is directed to overcoming these and other deficiencies in the art.

## SUMMARY

One aspect of the present application relates to a copolymer comprising a polymer backbone to which *N*-halamine (HA) and dopamine (DMA) are covalently attached, wherein the HA group is selected from

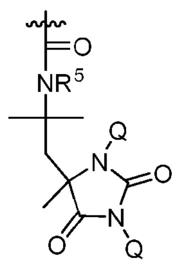 and 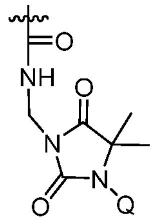 ,

where $R^5$ is H, Cl, Br, or I, and each Q is independently H, Cl, Br, or I; wherein the DMA group is

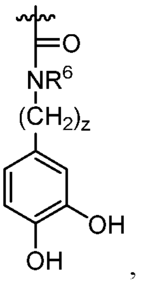

where $R^6$ is H, Cl, Br, or I, and z is 2 to 6; and

wherein the HA and DMA are present in the copolymer in a ratio of 0.4:9.6 to 9.6:0.4 (HA:DMA).

A second aspect of the present application relates to the copolymer further comprising polyethylene glycol groups, quaternary ammonium or zwitterion groups, or both, covalently attached to the polymer backbone by a CH or N group

wherein the ratio of HA:DMA is from 0.4:9.6 to 9.6:0.4; and
the copolymer comprises between 10 to 100,000 monomers comprising the HA group, the DMA group, the polyethylene glycol group, or the quaternary ammonium or zwitterion group.

A third aspect of the present application relates to a process for preparing the copolymers disclosed herein. The process includes providing a radically polymerizable *N*-halamine based monomer, providing a radically polymerizable dopamine based monomer, and dissolving the *N*-halamine based monomer and dopamine based monomer in a suitable solvent to form a solution of the *N*-halamine based monomer and dopamine based monomer. The solution is then subjected to a radical polymerization reaction in the presence of a free radical initiator to form a copolymer of the *N*-halamine based monomer and the dopamine based monomer.

A further aspect of the present application relates to a solution comprising a solvent and a copolymer described herein, wherein the solvent comprises ethanol.

A further aspect of the present application relates to an antimicrobial composition comprising the copolymers described herein.

Another aspect of the present application relates to a method of forming an antimicrobial coated material. This method includes dissolving one or more copolymers described herein in a solvent to form a copolymer solution. This method further involves either:

(i) immersing a material into the polymer solution for a period of time sufficient for the copolymers of the copolymer solution to bond to the material thereby forming a coated material, and removing the coated material from the copolymer solution; or
(ii) depositing the copolymer solution onto a surface of the material thereby forming a coated material;

optionally allowing the coated material to dry; and
treating the coated material with a second solution comprising a halogen.

Environmental surfaces are common avenues for microbial contamination and transmission in food processing establishments. The most immediate challenge when developing coatings for hard surfaces is ensuring sufficient adhesion. Previous research on *N*-halamine coatings typically employed methods such as grafting that required complex surface treatments, corrosive/toxic agents, or harsh and long-time heating to achieve stable adhesion to surfaces (Demir et al., "Polymeric Antimicrobial N-Halamine-Surface Modification of Stainless Steel," Industrial & Engineering Chemistry Research 56(41):11773-11781 (2017); Bastarrachea et al., "Development of Antimicrobial Stainless Steel via Surface Modification With N-Halamines: Characterization of Surface Chemistry and N-Halamine Chlorination," Journal of Applied Polymer Science 127(1):821-831 (2013); Bastarrachea et al., "Antimicrobial Coatings with Dual Cationic and N-Halamine Character: Characterization and Biocidal Efficacy," Journal of Agricultural and Food Chemistry 63(16):4243-4251 (2015)). In this application, the inventors took advantage of mussel-inspired dopamine chemistry (Lee et al., "Mussel-Inspired Surface Chemistry for Multifunctional Coatings," Science 318(5849):426-430 (2007)). Dopamine provides strong adhesion to diverse surfaces even in a wet environment (Lee et al., "A Reversible Wet/Dry Adhesive Inspired by Mussels and Geckos," Nature 448:338 (2007); Glass et al., "Enhanced Reversible Adhesion of Dopamine Methacrylamide-Coated Elastomer Microfibrillar Structures Under Wet Conditions," Langmuir 25(12):6607-6612 (2009)), and is relatively safe for biological applications (Ryu et al., "High-Strength Carbon Nanotube Fibers Fabricated by Infiltration and Curing of Mussel-Inspired Catecholamine Polymer," Advanced Materials 23(17):1971-1975 (2011)). In addition, dopamine functionalized polymers also have the dual function of cross-linking with either amine- or thiol-terminated molecules to form a thick and stable network (Ryu et al., "High-Strength Carbon Nanotube Fibers Fabricated by Infiltration and Curing of Mussel-Inspired Catecholamine Polymer," Advanced Materials 23(17):1971-1975 (2011); Tian et al., "Realizing Ultrahigh Modulus and High Strength of Macroscopic Graphene Oxide Papers Through Crosslinking of Mussel-Inspired Polymers," Advanced Materials 25(21):2980-2983 (2013); Ryu et al., "Catechol-Functionalized Chitosan/Pluronic Hydrogels for Tissue Adhesives and Hemostatic Materials," Biomacromolecules 12(7):2653-2659 (2011)). In this application, the inventors designed a polymer structure that combines both *N*-halamine antimicrobial and dopamine adhesive functionalities. The *N*-halamine-dopamine copolymer coated stainless steel surface completely inactivated more than 6 $\log_{10}$ CFU of both gram-positive and gram-negative bacteria within ten minutes of contact time. Furthermore, even after three "discharge-recharge" cycles, the chlorine content remained sufficiently high to maintain a similar bacteria-killing effectiveness, and after ten "discharge-recharge" cycles, 60% of the surface chlorine remained. The coating thickness and chlorine content could be tuned by adjusting the formulation of the coating. Finally, a scalable and convenient spray-coating method to apply the coating to real food equipment parts was developed. This new antimicrobial material may find broad applications as high-performance, low-cost, and easy-to-apply coatings especially for food-associated environmental surfaces.

## BRIEF DESCRIPTION OF THE DRAWINGS

Fig. 1 shows an illustration of the synthesis of an exemplary N-halamine-dopamine copolymer of the present application.

Fig. 2 is an illustration showing the dip-coating using the copolymers described herein and subsequent chlorination.

Figs. 3A-3D show the characterization of the copolymers disclosed herein and coatings of these copolymers. Fig. 3A is a $^{1}$H NMR spectrum of synthesized p(HA-co-DMA). The HA:DMA ratio was calculated as 7:3. Fig. 3B is a FT-IR spectra of HA, DMA, and p(HA-co-DMA). Fig. 3C is a panel of images showing the appearances and contact angles of bare stainless steel (SS-Ctrl) and polymer coated and chlorinated stainless steel (SS-Poly1-Cl). Fig. 3D shows the XPS spectra of C, N, Cl in bare stainless steel (SS-Ctrl), poly1 coated and unchlorinated stainless steel (SS-Poly1), and poly1 coated and chlorinated stainless steel (SS-Poly1-Cl). Poly1: p(HA-co-DMA).

Figs. 4A-4D are SEM micrographs of stainless steel and coating. Figs. 4A and 4C are bare stainless steel, and Figs. 4B and 4D are poly1-coated stainless steel. Poly1: p(HA-co-DMA).

Figs. 5A-5B are graphical illustrations of the oxidative chlorine content of the polymer coating on multiple substrates. Fig. 5A is a comparison of oxidative chlorine content on different materials: SS (stainless steel), PP (polypropylene), HDPE (high-density polyethylene), PVC (polyvinylchloride), and glass. Fig. 5B is a graph showing the chlorine content of the copolymer coated stainless steel after different "recharge-discharge" cycles. For all experiments, N=3. "R" represents recharge cycle. R0: coated and chlorinated. R1: after one "discharge-recharge" cycle. R10: after ten "discharge-recharge" cycles.

Figs. 6A-6B are graphical illustrations of antimicrobial efficacy test on surfaces. Fig. 6A shows different bacteria, inoculum: *S. aureus* (6.40 $\log_{10}$CFU/sample), and *E. coli* O157:H7 (6.32 $\log_{10}$CFU/sample). Fig. 6B shows the different recharge cycles, inoculum: *S. aureus* (R0, 6.40 $\log_{10}$CFU/sample; R1, 6.32 $\log_{10}$CFU/sample; R2, 5.88 $\log_{10}$CFU/sample); detection limit: 1.87 $\log_{10}$CFU/sample. SS-Ctrl: uncoated, chlorinated stainless steel; SS-Poly1: halamine-dopamine precursor polymer coated, unchlorinated stainless steel; SS-Poly1-Cl: halamine-dopamine polymer coated, chlorinated stainless steel.

Fig. 7 is a panel of fluorescence micrographs showing the antimicrobial control test of bare stainless steel (SS-Ctrl), *N*-halamine-dopamine precursor polymer coated stainless steel (SS-Poly1), and *N*-halamine-dopamine polymer coated stainless steel (SS-Poly1-Cl) in LB medium. The bright dots with diameter between 1-5 $\mu$m represent attached and survived bacteria *(S. aureus).*

Figs. 8A-8E are illustrations showing the tuning of the coating thickness and chlorine content through cross-linking. Fig. 8A is an illustration of the mechanism of cross-linking with PEI. Fig. 8B shows the XPS analysis of C, N, Cl and their atomic percentage (at.%) on bare stainless steel (SS-Ctrl), un-crosslinked (SS-Poly1-Cl), and PEI crosslinked coating (SS-Poly 1+PEI-Cl). Fig. 8C shows the FT-IR spectra of PEI, p(HA-co-DMA), and PEI cross-linked p(HA-*co*-DMA) +PEI coating. Fig. 8D is an image showing the appearance and contact angle of PEI crosslinked coating (SS-Poly1+PEI) through the dip-coating method. Fig. 8E is a graphical illustration of the oxidative chlorine content of p(HA-*co*-DMA) (poly1) and poly1+PEI coated surfaces through dip-coating (DC) and spray-coating (SP) methods.

Figs. 9A-9E are images showing the appearance and effectiveness of the copolymer coating on stainless steel (SS) 304 pipe. Fig. 9A is the uncoated used SS 304 pipe. Fig. 9B is the image of the spray-coated SS pipe after drying and during spray chlorination with 0.5% bleach. Fig. 9C shows the inoculating bacteria on coated SS pipes. Fig. 9D

displays the color-based indication of immobilized oxidative chlorines on SS surface. Fig. 9E is a graph of the antimicrobial control effect of *N*-halamine coating on SS pipe surface, inoculum bacteria: *S. aureus;* Experiment 1, 8.83 $log_{10}$CFU/mL; Experiment 2, 8.07 $log_{10}$CFU/mL; Experiment 3, 8.14 $log_{10}$CFU/mL. For all three experiments, sample size N=3. SSP: stainless steel pipe; SS-C-Cl: stainless steel coated with *N*-halamine-dopamine polymer and chlorinated with 0.5% bleach (~200 ppm of available chlorine).

## DETAILED DESCRIPTION

The present disclosure relates to copolymers of *N*-halamine (HA) and dopamine (DMA), and methods of producing the same. The copolymers disclosed herein are useful in antimicrobial compositions and coatings as described herein.

As used above, and throughout the description herein, the following terms, unless otherwise indicated, shall be understood to have the following meanings. If not defined otherwise herein, all technical and scientific terms used herein have the same meaning as is commonly understood by one of ordinary skill in the art to which this technology belongs. In the event that there is a plurality of definitions for a term herein, those in this section prevail unless stated otherwise.

The term "alkyl" means an aliphatic hydrocarbon group which may be straight or branched. When not otherwise restricted, the term refers to an alkyl of 20 or fewer carbons. Branched means that one or more lower alkyl groups such as methyl, ethyl, or propyl are attached to a linear alkyl chain. Exemplary alkyl groups include methyl, ethyl, n-propyl, i-propyl, n-butyl, t-butyl, n-pentyl, and 3-pentyl.

The term "monocyclic" used herein indicates a molecular structure having one ring.

The term "polycyclic" or "multi-cyclic" used herein indicates a molecular structure having two or more rings, including, but not limited to, fused, bridged, or spiro rings.

The term "carbocycle" means a cyclic hydrocarbon chain having about 5 to about 8 ring carbons such as cyclopentyl, cylcohexyl, etc. These groups can be optionally substituted with one or more functional groups.

The term "aryl" means an aromatic monocyclic or multi-cyclic (polycyclic) ring system of 6 to 19 carbon atoms, or of 6 to 10 carbon atoms, and includes arylalkyl groups. The ring system of the aryl group may be optionally substituted. Representative aryl groups include, but are not limited to, groups such as phenyl, naphthyl, azulenyl, phenanthrenyl, anthracenyl, fluorenyl, pyrenyl, triphenylenyl, chrysenyl, and naphthacenyl.

The term "heteroaryl" means an aromatic monocyclic or multi-cyclic ring system of about 5 to 19 ring atoms, or 5 to 10 ring atoms, in which one or more of the atoms in the ring system is/are element(s) other than carbon, for example, nitrogen, oxygen, or sulfur. In the case of multi-cyclic ring system, only one of the rings needs to be aromatic for the ring system to be defined as "heteroaryl". Particular heteroaryls contain about 5 to 6 ring atoms. The prefix aza, oxa, thia, or thio before heteroaryl means that at least a nitrogen, oxygen, or sulfur atom, respectively, is present as a ring atom. A nitrogen, carbon, or sulfur atom in the heteroaryl ring may be optionally oxidized; the nitrogen may optionally be quaternized. Representative heteroaryls include pyridyl, 2-oxo-pyridinyl, pyrimidinyl, pyridazinyl, pyrazinyl, triazinyl, furanyl, pyrrolyl, thiophenyl, pyrazolyl, imidazolyl, oxazolyl, isoxazolyl, thiazolyl, isothiazolyl, triazolyl, oxadiazolyl, thiadiazolyl, tetrazolyl, indolyl, isoindolyl, benzofuranyl, benzothiophenyl, indolinyl, 2-oxoindolinyl, dihydrobenzofuranyl, dihydrobenzothiophenyl, indazolyl, benzimidazolyl, benzooxazolyl, benzothiazolyl, benzoisoxazolyl, benzoisothiazolyl, benzotriazolyl, benzo [1,3]dioxolyl, quinolinyl, isoquinolinyl, quinazolinyl, cinnolinyl, pthalazinyl, quinoxalinyl, 2,3-dihydro-benzo[1,4]dioxinyl, benzo[1,2,3]triazinyl, benzo[1,2,4]triazinyl, 4*H*-chromenyl, indolizinyl, quinolizinyl, 6*aH*-thieno[2,3-d]imidazolyl, 1*H*-pyrrolo[2,3-*b*]pyridinyl, imidazo[1,2-*a*]pyridinyl, pyrazolo[1,5-*a*]pyridinyl, [1,2,4]triazolo[4,3-*a*]pyridinyl, [1,2,4]triazolo[1,5-*a*] pyridinyl, thieno[2,3-*b*]furanyl, thieno[2,3-*b*]pyridinyl, thieno[3,2-*b*]pyridinyl, furo[2,3-*b*]pyridinyl, furo[3,2-*b*]pyridinyl, thieno[3,2-*d*]pyrimidinyl, furo[3,2-*d*]pyrimidinyl, thieno[2,3-*b*]pyrazinyl, imidazo[1,2-*a*]pyrazinyl, 5,6,7,8-tetrahydroimidazo [1,2-*a*]pyrazinyl, 6,7-dihydro-4*H*-pyrazolo[5,1-*c*][1,4]oxazinyl, 2-oxo-2,3-dihydrobenzo[*d*]oxazolyl, 3,3-dimethyl-2-oxoindolinyl, 2-oxo-2,3-dihydro-1*H*-pyrrolo[2,3-*b*]pyridinyl, benzo[*c*][1,2,5]oxadiazolyl, benzo[*c*][1,2,5]thiadiazolyl, 3,4-dihydro-2H-benzo[*b*][1,4]oxazinyl, 5,6,7,8-tetrahydro-[1,2,4]triazolo[4,3-*a*]pyrazinyl, [1,2,4]triazolo[4,3-*a*]pyrazinyl, and 3-oxo-[1,2,4]triazolo[4,3-*a*]pyridin-2(3*H*)-yl.

"Unsubstituted" atoms bear all of the hydrogen atoms dictated by their valency.

The term "optionally substituted" is used to indicate that a group may have a substituent at each substitutable atom of the group (including more than one substituent on a single atom), provided that the designated atom's normal valency is not exceeded and the identity of each substituent is independent of the others. Up to three H atoms in each residue are replaced with alkyl, halogen, haloalkyl, hydroxy, lower alkoxy, carboxy, carboalkoxy (also referred to as alkoxycarbonyl), carboxamido (also referred to as alkylaminocarbonyl), cyano, carbonyl, nitro, amino, alkylamino, dialkylamino, mercapto, alkylthio, sulfoxide, sulfone, acylamino, amidino, phenyl, benzyl, heteroaryl, phenoxy, benzyloxy, or heteroaryloxy. When a substituent is keto (i.e., =0), then two hydrogens on the atom are replaced. Combinations of substituents and/or variables are permissible only if such combinations result in stable compounds; by "stable compound" or "stable structure" is meant a compound that is sufficiently robust to survive isolation to a useful degree of purity from a reaction mixture, and formulation into an efficacious therapeutic agent.

The term "halogen" means fluoro, chloro, bromo, or iodo.

The term "copolymer" refers to a polymer derived from more than one species of monomer.

The term "alternating copolymer" or "alternating polymer" refers to a copolymer consisting of two or more species of monomeric units that are arranged in an alternating sequence in which every other building unit is different $(-M_1M_2-)_n$.

The term "random copolymer" or "random polymer" refers to a copolymer in which there is no definite order for the sequence of the different monomeric building blocks, e.g., $(-M_1M_2M_1M_1M_2M_1M_2M_2-)$.

The term "statistical copolymer" or "statistical polymer" refers to a copolymer in which the sequential distribution of the monomeric units obeys known statistical laws.

The term "block copolymer" or "block polymer" refers to a macromolecule consisting of long sequences of different repeat units. Exemplary block polymers include, but are not limited to $A_nB_m$, $A_aB_mA_m$, $A_nB_mC_k$, or $A_nB_mC_kA_n$.

The term "a derivative thereof" refers to a salt thereof, an ester thereof, a free acid form thereof, a free base form thereof, a solvate thereof, a deuterated derivative thereof, a hydrate thereof, an N-oxide thereof, a polymorph thereof, a stereoisomer thereof, a geometric isomer thereof, a tautomer thereof, a mixture of tautomers thereof, an enantiomer thereof, a diastereomer thereof, a racemate thereof, a mixture of stereoisomers thereof, an isotope thereof (e.g., tritium, deuterium), or a combination thereof.

As used herein, the term "biocidal" means activity that inactivates microorganisms and/or virus particles.

One aspect of the present application relates to a copolymer comprising a polymer backbone to which N-halamine (HA) and dopamine (DMA) groups are covalently attached.

In accordance with this aspect of the disclosure, the ratio of HA to DMA present in the copolymer is in the range of 0.4:9.6 to 9.6:0.4 (HA:DMA). The ratio HA to DMA in the copolymers disclosed herein can be, for example, 9.6:0.4, 9.5:0.5, 9.4:0.6, 9.3:0.7, 9.2:0.8, 9.1:0.9, 9.0:1.0, 8.9:1.1, 8.8:1.2, 8.7:1.3, 8.6:1.4, 8.5:1.5, 8.4:1.6, 8.3:1.7, 8.2:1.8, 8.1:1.9, 8.0:2.0, 7.9:2.1, 7.8:2.2, 7.7:2.3, 7.6:2.4, 7.5:2.5, 7.4:2.6, 7.3:2.7, 7.2:2.8, 7.1:2.9, 7.0:3.0, 6.9:3.1, 6.8:3.2, 6.7:3.3, 6.6:3.4, 6.5:3.5, 6.4:3.6, 6.3:3.7, 6.2:3.8, 6.1:3.9, 6.0:4.0, 5.9:4.1, 5.8:4.2, 5.7:4.3, 5.6:4.4, 5.5:4.5, 5.4:4.6, 5.3:4.7, 5.2:4.8, 5.1:4.9, 5.0:5.0, 4.9:5.1, 4.8:5.2, 4.7:5.3, 4.6:5.4, 4.5:5.5, 4.4:5.6, 4.3:5.7, 4.2:5.8, 4.1:5.9, 4.0:6.0, 3.9:6.1, 3.8:6.2, 3.7:6.3, 3.6:6.4, 3.5:6.5, 3.4:6.6, 3.3:6.7, 3.2:6.8, 3.1:6.9, 3.0:7.0, 2.9:7.1, 2.8:7.2, 2.7:7.3, 2.6:7.4, 2.5:7.5, 2.4:7.6, 2.3:7.7, 2.2:7.8, 2.1:7.9, 2.0:8.0, 1.9:8.1, 1.8:8.2, 1.7:8.3, 1.6:8.4, 1.5:8.5, 1.4:8.6, 1.3:8.7, 1.2:8.8, 1.1:8.9, 1.0:9.0, 0.9:9.1, 0.8:9.2, 0.7:9.3, 0.6:9.4, 0.5:9.5, or 0.4:9.6 (HA:DMA). In some embodiments, the ratio of HA:DMA in the copolymers disclosed herein is 7:3.

In some embodiments, the copolymers disclosed herein contain one type of *N*-halamine monomer. In other embodiments, the copolymers disclosed herein contain more than one type of *N*-halamine monomer, e.g., two or more different types of *N*-halamine monomers. The *N*-halamine monomers are selected from

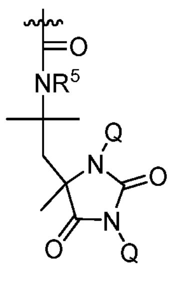

, and

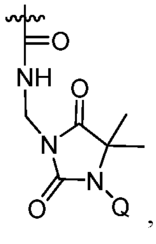

,

wherein

$R^5$ is H, Cl, Br, or I;
and
each Q is independently H, Cl, Br, or I.

In some embodiments of the present disclosure, the copolymers disclosed herein contain one type of dopamine monomer. In other embodiments, the copolymers disclosed herein contain more than one type of dopamine monomer, e.g., two or more different dopamine monomers. The dopamine monomers are

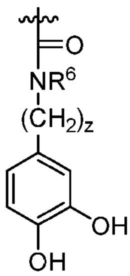

,

wherein

$R^6$ is H, Cl, Br, or I; and
z is 2 to 6.

A second aspect of the present application relates to the copolymer further comprising polyethylene glycol groups, quaternary ammonium or zwitterion groups, or both, covalently attached to the polymer backbone by a CH or N group

wherein the ratio of HA:DMA is from 0.4:9.6 to 9.6:0.4; and
the copolymer comprises between 10 to 100,000 monomers comprising the HA group, the DMA group, the polyethylene glycol group, or the quaternary ammonium or zwitterion group.

In accordance with this aspect of the disclosure, the ratio of HA:DMA monomers in the copolymers described herein is from 0.4:9.6 to 9.6:0.4, or any ratio in between, e.g., 9.6:0.4, 9.5:0.5, 9.4:0.6, 9.3:0.7, 9.2:0.8, 9.1:0.9, 9.0:1.0, 8.9:1.1, 8.8:1.2, 8.7:1.3, 8.6:1.4, 8.5:1.5, 8.4:1.6, 8.3:1.7, 8.2:1.8, 8.1:1.9, 8.0:2.0, 7.9:2.1, 7.8:2.2, 7.7:2.3, 7.6:2.4, 7.5:2.5, 7.4:2.6, 7.3:2.7, 7.2:2.8, 7.1:2.9, 7.0:3.0, 6.9:3.1, 6.8:3.2, 6.7:3.3, 6.6:3.4, 6.5:3.5, 6.4:3.6, 6.3:3.7, 6.2:3.8, 6.1:3.9, 6.0:4.0, 5.9:4.1, 5.8:4.2, 5.7:4.3, 5.6:4.4, 5.5:4.5, 5.4:4.6, 5.3:4.7, 5.2:4.8, 5.1:4.9, 5.0:5.0, 4.9:5.1, 4.8:5.2, 4.7:5.3, 4.6:5.4, 4.5:5.5, 4.4:5.6, 4.3:5.7, 4.2:5.8, 4.1:5.9, 4.0:6.0, 3.9:6.1, 3.8:6.2, 3.7:6.3, 3.6:6.4, 3.5:6.5, 3.4:6.6, 3.3:6.7, 3.2:6.8, 3.1:6.9, 3.0:7.0, 2.9:7.1, 2.8:7.2, 2.7:7.3, 2.6:7.4, 2.5:7.5, 2.4:7.6, 2.3:7.7, 2.2:7.8, 2.1:7.9, 2.0:8.0, 1.9:8.1, 1.8:8.2, 1.7:8.3, 1.6:8.4, 1.5:8.5, 1.4:8.6, 1.3:8.7, 1.2:8.8, 1.1:8.9, 1.0:9.0, 0.9:9.1, 0.8:9.2, 0.7:9.3, 0.6:9.4, 0.5:9.5, or 0.4:9.6 (HA:DMA). In some embodiments, the ratio of HA:DMA in the copolymers described herein is 7:3.

In some embodiments, the copolymer of the present disclosure is a copolymer of Formula (II):

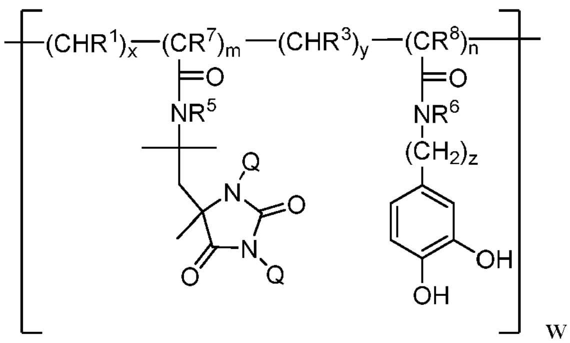

(II)

wherein:

$R^1$ is independently H, $CH_3$, PEG, a quaternary ammonium or zwitterion;
$R^3$ is independently H, PEG, a quaternary ammonium or zwitterion;
$R^5$ is independently H, Cl, Br, or I;
$R^6$ is independently H, Cl, Br, or I;
$R^7$ is independently H or $CH_3$;
$R^8$ is independently H or $CH_3$;
Q is independently H, Cl, Br, or I;
z is independently 2 to 6;
x is independently 1 to 10;
y is independently 1 to 10;

m is independently 1 to 10;
n is independently 1 to 10;
w is 1 to 10,000; and
the ratio of m:n is from 0.4:9.6 to 9.6:0.4.

In accordance with these embodiments of the disclosure, the ratio of m:n in the copolymers described herein is from 0.4:9.6 to 9.6:0.4, or any ratio in between as described *supra.* In some embodiments the ratio of m:n in the copolymers disclosed herein is 7:3

In some embodiments of the present disclosure, the average molecular weight of the copolymer ranges from 1,000 to 20,000 Da. The average molecular weight can be, for example, 1,000 Da, 2,000 Da, 3,000 Da, 4,000 Da, 5,000 Da, 6,000 Da, 7,000 Da, 8,000 Da, 9,000 Da, 10,000 Da, 11,000 Da, 12,000 Da, 13,000 Da, 14,000 Da, 15,000 Da, 16,000 Da, 17,000 Da, 18,000 Da, 19,000 Da, or 20,000 Da.

In some embodiments of the present disclosure, the copolymers have a polydispersity ranging from 1.01 to 2.99. The polydispersity of the copolymers disclosed herein can range from, for example, 1.01, 1.05, 1.10, 1.15, 1.20, 1.25, 1.30, 1.35, 1.40, 1.45, 1.50, 1.55, 1.60, 1.65, 1.70, 1.75, 1.80, 1.85, 1.90, 1.95, 12.00, 2.05, 2.10, 2.15, 2.20, 2.25, 2.30, 2.35, 12.40, 2.45, 2.50, 2.55, 2.60, 2.65, 2.70, 2.7, 2.80, 2.85, 2.90, 2.95, or 2.99.

The present application provides *N*-halamine-dopamine copolymers, including alternating copolymers, random copolymers, statistical copolymers, segmented polymers, block copolymers, multiblock copolymers, gradient copolymers, graft copolymers, star copolymers, branched copolymers, hyperbranched copolymers and combinations thereof. The *N*-halamine - dopamine copolymers can be used alone or they can be included in a composition, i.e., blended/mixed with other materials.

In some embodiments, the *N*-halamine-dopamine copolymers as disclosed herein are halogenated to assume biocidal activity. Furthermore, upon the loss of biocidal activity due to extensive use, the activity can be easily recharged by subsequent halogenation. The copolymers described herein can be blended into materials before or after halogenation by a mixing process. Halogenation of the compounds before or after blending can be accomplished by exposure to a source of free halogen. For chlorination the process can be conducted in aqueous solution using such sources as gaseous chlorine, sodium hypochlorite bleach, calcium hypochlorite, chloroisocyanurates, and chlorinated hydantoins. Likewise, for bromination the process can be accomplished by exposure in aqueous solution to sources, such as molecular bromine liquid, sodium bromide in the presence of an oxidizer, such as potassium peroxy monosulfate or hypochlorite bleach, and brominated hydantoins. Halogenation can also be affected in organic solvents, such as methylene chloride, or by employing free radical halogenating agents, such as tert-butyl hypochlorite.

Another aspect of the present application relates to a process for preparing the *N*-halamine-dopamine copolymers disclosed herein. The process includes providing a radically polymerizable N-halamine based monomer comprising the HA group, providing a radically polymerizable dopamine based monomer comprising the DMA group, and dissolving the *N*-halamine based monomer and dopamine based monomer in a suitable solvent to form a solution of the *N*-halamine based monomer and dopamine based monomer. The solution is then subjected to a radical polymerization reaction in the presence of a free radical initiator to form a copolymer of the *N*- halamine based monomer and the dopamine based monomer.

In accordance with this aspect of the disclosure, suitable free radical initiators to be utilized in the polymerization process include, without limitation 2,2'-azobis(2-methylpropionitrile), benzoyl peroxide, 1,1'-azobis(cyclohexanecarbonitrile), t-butylperoxide, dicumylperoxide, potassium persulfate, aralkyl halides, aryl halides 2,2-dimethoxy-1,2-diphenylethan-1-one, and (2,4,6-trimethylbenzoyl)-diphenylphosphine oxide.

Suitable solvents for use in the process of preparing the *N*-halamine-dopamine copolymers is selected based the requirements of monomer solubility and a boiling point compatible with the type of polymerization being used and the polymerization temperature. Exemplary solvents useful for the formation of the copolymers described herein include, but are not limited methanol, ethanol, methylene chloride, toluene, dioxane, THF, chloroform, cyclohexane, dimethyl sulfoxide, dimethyl formamide, acetone, acetonitrile, n-butanol, n-pentanol, chlorobenzene, diethylether, tert butanol, 1,2,-dichloroethylene, diisopropylether, ethanol, ethylacetate, ethylmethylketone, heptane, hexane, isopropylalcohol, isoamylalcohol, methanol, pentane, n-propylalcohol, pentachloroethane, 1,1,2,2,-tetrachloroethane, 1,1,1,-trichloroethane, tetrachloroethylene, tetrachloromethane, trichloroethylene, water, xylene, benzene, nitromethane, glycerol, and mixtures thereof.

The solvent can further include stabilizers, surfactants, or dispersants. Suitable surfactants include ionic and nonionic surfactants such as alkyl polyglycol ethers such as ethoxylation products of lauryl, oleyl, and stearyl alcohols; alkyl phenol polyglycol ethers such as ethoxylation products of octyl- or nonylphenol, diisopropyl phenol, triisopropyl phenol; alkali metal ammonium salts of alkyl, aryl or alkylaryl sulfonates, sulfates, and phosphates, including sodium lauryl sulfate, sodium octylphenol glycolether sulfate, sodium dodecylbenzene sulfonate, sodium lauryldiglycol sulfate, and ammonium tritertiarybutyl phenol and penta- and octa-glycol sulfonates, sulfosuccinate salts such as disodium ethoxylated nonylphenol half ester of sulfosuccinic acid, disodium n-octyldecyl sulfosuccinate, and sodium dioctyl sulfosuccinate.

In accordance with this aspect of the disclosure, the radical polymerization reaction can be carried out at a temperature ranging from 40°C to 120 °C. In some embodiments, the radical polymerization reaction is carried out at 40°C, at 45°C, at 50°C, at 55°C, at 60°C, at 65°C, at 70°C, at 75°C, at 80°C, at 85°C, at 90°C, at 95°C, at 100°C, at 105°C, at 110°C, at 115°C, or at 120°C.

In one embodiment, polymerization to form the N-halamine-dopamine copolymers as described herein is carried out using a free radical initiation method. For example, in one embodiment, the monomers of dopamine and the N-halamine precursor are dissolved in methanol or other suitable solvent and this solution is reacted, at the boiling point for the solvent, with azobisisobutyronitrile under nitrogen atmosphere to produce the unhalogenated copolymer. Alternatively, the monomers can be copolymerized with other types of monomers by a free radical initiation method. This method involves dissolving all desired monomers in N,N-dimethylacetamide or other suitable solvent, adding, under nitrogen atmosphere, azobisisobutyronitrile, and allowing the mixture to react, at the boiling point temperature for the solvent, under nitrogen atmosphere to produce the N-halamine-dopamine copolymer. Other monomers suitable for copolymerizing with the dopamine and the N-halamine precursor monomers include, but are not limited to, acrylonitrile, styrene, methacrylamide, methyl-methacrylate, ethylene, propylene, butylenes, butadienes and other alkenes and dienes. The resulting unhalogenated copolymers can then be halogenated, such as with free chlorine and bromine sources, as described herein.

In accordance with this aspect of the disclosure, other polymerization techniques known in the art can also be used to form the polymers of the present invention. Suitable polymerization reactions include, without limitation, living radical/controlled free radical polymerization, emulsion polymerization, and suspension polymerization.

In one embodiment, the polymerization reaction is a controlled free radical polymerization, which involves living/controlled polymerization with free radical as the active polymer chain end (Moad et al., "The Chemistry of Radical Polymerization - Second Fully Revised Edition," Elsevier Science Ltd. (2006)). This form of polymerization is a form of addition polymerization where the ability of a growing polymer chain to terminate has been removed. The rate of chain initiation is thus much larger than the rate of chain propagation. The result is that the polymer chains grow at a more constant rate than seen in traditional chain polymerization and their lengths remain very similar. The polymerizing step typically occurs in the presence of a free radical initiator, and a catalyst or a chain transfer agent to form the polymer.

One form of controlled free radical polymerization suitable for producing the N-halamine-dopamine copolymers as described herein is Radical Addition-Fragmentation Chain Transfer (RAFT). RAFT polymerization is a type of living polymerization or controlled polymerization, utilizing a chain transfer agent (CTA). Conventional RAFT polymerization mechanism, consisting of a sequence of addition-fragmentation equilibria, is described in Moad et al., "Living Radical Polymerization by the Raft Process- a First Update," Australian Journal of Chemistry 59: 669-92 (2006). The RAFT polymerization reaction starts with initiation. Initiation is accomplished by adding an agent capable of decomposing to form free radicals; the decomposed free radical fragment of the initiator attacks a monomer yielding a propagating radical ($P^{\bullet}_n$), in which additional monomers are added producing a growing polymer chain. In the propagation step, the propagating radical ($P^{\bullet}_n$) adds to a chain transfer agent (CTA), followed by the fragmentation of the intermediate radical forming a dormant polymer chain and a new radical ($R^{\bullet}$). This radical ($R^{\bullet}$) reacts with a new monomer molecule forming a new propagating radical ($P^{\bullet}_m$). In the chain propagation step, ($P^{\bullet}_n$) and ($P^{\bullet}_n$) reach equilibrium and the dormant polymer chain provides an equal probability to all polymer chains to grow at the same rate, allowing polymers to be synthesized with narrow polydispersity. Termination is limited in RAFT, and, if it occurs, it is negligible. Targeting a specific molecular weight in RAFT can be calculated by multiplying the ratio of monomer consumed to the concentration of CTA used by the molecular weight of the monomer.

The initiating agents, referred to as "initiators", suitable for initiating RAFT depend on the polymerization, including the types of monomers, the type of catalyst system, the solvent system, and the reaction conditions. Typical radical initiators include azo compounds, which provide a two-carbon centered radical. Radical initiators such as benzoyl peroxide, azobisisobutyronitrile (AIBN), 1,1' azobis(cyclohexanecarbonitrile) (ABCN), or 4,4'-Azobis(4-cyanovaleric acid) (ACVA); high temperature initiators, such as t-butylperoxide and dicumylperoxide; redox initiator such as benzoyl peroxide/*N,N*-dimethylaniline; microwave heating initiator; photoinitiator such as (2,4,6-trimethylbenzoyl)-diphenylphosphine oxide; gamma radiation initiator; or Lewis acids such as scandium(III) triflate or yttrium (III) triflate, are typically used in RAFT polymerization, and are suitable for use in producing the *N*-halamine-dopamine copolymers as described herein.

RAFT polymerization can use a wide variety of CTA agents. Suitable CTA agents should be capable of initiating the polymerization of the monomers (dopamine and *N*-halamine) and achieve a narrow polydispersity in the process. For a RAFT polymerization to be efficient, the initial CTA agents and the polymer RAFT agent should have a reactive C=S double bond; the intermediate radical should fragment rapidly without side reactions; the intermediate should partition in favor of products, and the expelled radicals ($R^{\bullet}$) should efficiently re-initiate polymerization. A suitable CTA agent is typically a thiocarbonylthio compound (ZC(=S)SR:

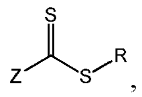

where R is free radical leaving group and Z is a group that modifies addition and fragmentation rates of RAFT polymerization). Exemplary CTA agents of this type include, but are not limited to, a dithioester compound (where Z = aryl, heteraryl, or alkyl), a trithiocarbonate compound (where Z = alkylthio, arylthio, or heteroarylthio), a dithiocarbamate compound (where Z = arylamine or heterarylamine or alkylamine), and a xanthate compound (where Z = alkoxy, aryloxy, or heteroaryloxy), that are capable or reversible association with polymerizable free radicals. Z can also be sulfonyl, phosphonate, or phosphine. Other suitable CTA agents (or RAFT agents) include 1-phenylethyl benzodithioate , 1-phenylethyl 2-phenylpropanedithioate, and others known in the art (*see* Moad et al., "Living Radical Polymerization by the Raft Process- a First Update," Australian Journal of Chemistry 59: 669-92 (2006); Moad et al., "Living Radical Polymerization by the Raft Process- a Second Update," Australian Journal of Chemistry 62(11):1402-72 (2009); Moad et al., "Living Radical Polymerization by the Raft Process- a Third Update," Australian Journal of Chemistry 65: 985-1076 (2012); Skey et al., "Facile one pot synthesis of a range of reversible addition-fragmentation chain transfer (RAFT) agents." Chemical Communications 35: 4183-85 (2008)). Effectiveness of the CTA agent depends on the monomer being used and is determined by the properties of the free radical leaving group R and the Z group. These groups activate and deactivate the thiocarbonyl double bond of the RAFT agent and modify the stability of the intermediate radicals (Moad et al., "Living Radical Polymerization by the Raft Process- a Second Update," Australian Journal of Chemistry 62(11):1402-72 (2009)).

Methods of selecting initiators and reaction conditions for RAFT reactions are well known in the art, *see e.g.,* U.S. Patent Application Publication No. 2014/0343192 A1 to Cochran et al.

Another form of living free radical polymerization that can be used to produce the N-halamine-dopamine copolymers described herein is atom transfer radical polymerization (ATRP). ATRP is a catalyzed, reversible redox process that achieves controlled polymerization via facile transfer of labile radicals (e.g., halide radicals) between growing polymer chains and a catalyst (Davis et al., "Atom Transfer Radical Polymerization of tert-Butyl Acrylate and Preparation of Block Copolymers," Macromolecules 33:4039-4047 (2000); Matyjaszewski et al., "Atom Transfer Radical Polymerization," Chemical Reviews 101:2921-2990 (2001)). In ATRP, chain termination and transfer reactions are essentially eliminated by keeping the free radical concentration small. Briefly, the mechanism by which ATRP operates may be summarized as:

$$\mathrm{P{-}X + Cu_{I}X \overset{K}{\rightleftharpoons} P\cdot + Cu_{II}X_2} \qquad (1)$$

$$\mathrm{P_{i}\cdot + M \xrightarrow{k_p} P_{i+1}\cdot} \qquad (2)$$

In Equation (1), the labile radical X may be a halogen (e.g., Br, Cl) attached to end of a polymer P. The catalyst, $Cu_IBr$, reversibly abstracts this halogen, forming a polymer free radical (P·). The equilibrium achieved between inert polymers and active polymer free radicals strongly favors the left side ($K << 10^{-8}$). Equation (2) is the standard free radical propagation reaction between a polymer of length i and a monomer M. The small free radical concentration ensured by equation (1) virtually eliminates termination reactions, and the halogen functionality is retained on polymers produced, which allows the production of copolymers from nearly any monomer amenable to conventional free radical polymerization.

The ATRP polymerization reaction starts with initiation. Initiation is accomplished by adding an agent capable of decomposing to form free radicals; the decomposed free radical fragment of the initiator attacks a monomer yielding a monomer-free radical, and ultimately produces an intermediate capable of propagating polymerization. The initiation is typically based on the reversible formation of growing radicals in a redox reaction between various transition metal compounds and an initiator. Simple organic halides are typically used as model halogen atom transfer initiators. Exemplary initiators for ATRP are aralkyl halides or aryl halides, such as benzyl bromide or benzyl chloride.

In ATRP, the introduction of a catalyst system to the reaction media is required to establish the equilibrium between active states (active polymer free radicals for the growth of the polymer) and dormant states (the formed inert polymer). The catalyst is typically a transition metal compound capable of participating in a redox cycle with the initiator and a dormant polymer chain. The transition-metal compound used herein is a transition-metal halide. Any transition metal that can participate in a redox cycle with the initiator and dormant polymer chain, but does not form a direct C-metal bond with the polymer chain, is suitable for use in the reaction producing the N-halamine-dopamine copolymers as described herein. Exemplary transition metals include $Cu^{1+}$, $Cu^{2+}$, $Fe^{2+}$, $Fe^{3+}$, $Ru^{2+}$, $Ru^{3+}$, $Ru^{4+}$, $Ru^{5+}$, $Ru^{6+}$, $Cr^{2+}$, $Cr^{3+}$, $Mo^{0}$, $Mo^{+}$, $Mo^{2+}$, $Mo^{3+}$, $W^{2+}$, $W^{3+}$, $Mn^{3+}$, $N4n^{4+}$, $Rh^{+}$, $Rh^{2+}$, $Rh^{3+}$, $Rh^{4+}$, $Re^{2+}$, $Re^{3+}$, $Re^{4+}$, $Co^{+}$, $Co^{2+}$, $Co^{3+}$, $V^{2+}$, $V^{3+}$, $V^{4+}$, $V^{5+}$, $Zn^{+}$, $Zn^{2+}$, $Au^{+}$, $Au^{2+}$, $Au^{3+}$, $Hg^{+}$, $Hg^{2+}$, $Pd^{0}$, $Pd^{+}$, $Pd^{2+}$, $Pt^{0}$, $Pt^{+}$, $Pt^{2+}$, $Pt^{3+}$, $Pt^{4+}$, $Ir^{0}$, $Ir^{+}$, $Ir^{2+}$, $Ir^{3+}$, $Ir^{4+}$, $Os^{2+}$, $Os^{3+}$, $Os^{4+}$, $Nb^{2+}$, $Nb^{3+}$,

$Nb^{4+}$, $Nb^{5+}$, $Ta^{3+}$, $Ta^{4+}$, $Ta^{5+}$, $Ni^{0}$, $Ni^{+}$, $Ni^{2+}$, $Ni^{3+}$, $Nd^{0}$, $Nd^{+}$, $Nd^{2+}$, $Nd^{3+}$, $Ag^{+}$, and $Ag^{2+}$. A typical transition-metal catalyst system is $CuCl/CuCl_2$.

A ligand serves to coordinate with the transition metal compound such that direct bonds between the transition metal and growing polymer radicals are not formed, and the formed copolymers are isolated. The ligand can be any N-, O-, P- or S- containing compound that coordinates with the transition metal to form a $\sigma$- bond, any C-containing compound that coordinates with the transition metal to form a $\pi$- bond, or any C-containing compound that coordinates with the transition metal to form a C-transition metal $\sigma$-bond but does not form a C-C bond with the monomers under the polymerizing conditions. A typical ligand used in ATRP is pentamethyldiethylene-triamine (PMDETA).

Methods of selecting initiators and catalysts/ligand system for ATRP reaction are known in the art, see e.g., U.S. Patent No. 5,763,548 to Matyjaszewski et al.; U.S. Patent No. 6,538,091 to Matyjaszewski et al.; and Matyjaszewski (Matyjaszewski et al., "Atom Transfer Radical Polymerization," Chemical Reviews 101:2921-2990 (2001).

The concentration of *N*-halamine and dopamine monomers used in any of the above described polymerization reactions depends partially on the solubility of the monomer and the polymer products as well as the evaporation temperature of the solvent. Solvent concentration can also affect the gelation of the polymer. Insufficient solvent can cause the polymer to crosslink in a shorter time period without ever reaching high enough conversions. The concentration of the monomer dissolved in the solvent in reactions may range from 1% to 100% weight percentage monomer. Typically, a monomer concentration of less than 90 wt% is suitable to ensure the solubility of the resulting polymers and additionally to prevent premature gelation.

To provide biocidal activity to the copolymers produced as described herein or to a material or surface comprising the copolymers described herein, the copolymers or material/surface comprising the copolymers are halogenated as described herein. In one embodiment, the copolymer is halogenated prior to incorporation into a material or attachment to a surface. In another embodiment unhalogenated copolymers can be attached to the surface or incorporated in the material and then subsequently halogenated.

The N-halamine and dopamine copolymer biocidal activity described herein can be used to inactivate and/or neutralize pathogenic microorganisms, such as bacteria, fungi, mold, and viruses, which can cause infectious diseases, as well as noxious odors and unpleasant coloring. Compositions comprising the *N*-halamine-dopamine copolymers, such as coatings, can be applied to or used with a wide variety of porous and non-porous substrates including, but not limited to, cellulose, synthetic fibers, fabrics, filter materials, latex paint, chitin, chitosan, glass, ceramics, plastics, rubber, cement grout, latex caulk, porcelain, acrylic films, vinyl, polyurethanes, silicon tubing, marble, metal, metal oxides, and silica.

Another aspect of the present application relates to an antimicrobial composition comprising the *N*-halamine-dopamine copolymers described herein. The antimicrobial composition can be in a liquid, powder, or aerosol form, that can be used to form a coating on any surface of the substrates described *supra* to confer biocidal activity to that substrate surface. The copolymers of the antimicrobial composition attach to the surface of a substrate via covalent bonding. Furthermore the copolymers of the anti-microbial composition can crosslink to each other to increase the thickness, for example, of a coating of the anti-microbial composition on a surface. In one embodiment, the copolymers of the coating are crosslinked to each other by a polyetherimide crosslinker.

Another aspect of the present disclosure relates to a substrate, material, device or system coated with the *N*-halamine-dopamine copolymers or the antimicrobial composition comprising the *N*-halamine-dopamine copolymers. Suitable devices or systems include, but are not limited to food storage devices, food processing devices, air filters in air filtration systems, pipes and filters in water systems, and biomedical devices, equipment, instruments, and furniture in hospitals and other medical facilities. The device or system may have an antimicrobial coating at a thickness of 10 nm.

Another aspect of the present application relates to a method of forming an antimicrobial coated material. This method includes dissolving one or more copolymers described herein in a solvent to form a copolymer solution. The method further involves either

(i) immersing a material into the copolymer solution for a period of time sufficient for the copolymers of the copolymer solution to bond to the material thereby forming a coated material, and then removing the coated material from the copolymer solution; or

(ii) depositing the copolymer solution onto a surface of the material thereby forming a coated material (e.g. by spraying, rolling or brushing);

optionally allowing the coated material to dry; and

treating the coated material with a second solution comprising a halogen, e.g., chlorine, bromine or iodine. A suitable solution comprising chlorine is a bleach solution. Other suitable solutions include solutions of calcium hypochlorite, N-chlorosuccinimide, sodium dichloroisocyanurate, trichloroisocyanuric acid, tertiary butyl hypochlorite, N-chloroacetamide, and *N*-chloramines.

In some embodiments, the material is immersed under conditions effective to create a coating of a desired

thickness, i.e., a thickness of 1nm, 2nm, 3nm, 4nm, 5nm, 6nm, 7nm, 8nm, 9nm, 10nm, or >10nm. Varying the conditions of immersion, such as the number of repeated immersions in the copolymer solution or duration of immersion of the material in the copolymer solution, will modulate the thickness of the coating. This involves repeated immersion in the copolymer solution.

In some embodiments, the thickness of the coating can be varied by adding a crosslinking agent to the copolymer solution prior to immersing the material into the copolymer solution. The ratio of the crosslinking agent to copolymer in the copolymer solution can range from 1:10 to 10:1, or any ratio in between, e.g., 1:10, 2:9, 3:8, 4:7, 5:6. 6:5, 7:4, 8:3, 9:2, or 10:1. The crosslinking agent induces crosslinking between copolymers in the copolymer solution, which will increase the thickness of the coating on a desired material.

Porous and non-porous materials that can be coated in accordance with this aspect of the disclosure are described *supra,* and include, without limitation, cellulose, synthetic fibers, fabrics, filter materials, latex paint, chitin, chitosan, glass, ceramics, plastics, rubber, cement grout, latex caulk, porcelain, acrylic films, vinyl, polyurethanes, silicon tubing, marble, metal, metal oxides, and silica.

The *N*-halamine-dopamine copolymers described herein can be deposited onto a surface of a substrate using known techniques (*see e.g.,* U.S. Patent Application No. 2018/0327627). One exemplary method for depositing the N-halamine-dopamine copolymers described herein on a hard-substrate surface involves vapour deposition techniques. There are several methods that fall within the general category of vapour deposition, including, e.g., physical vapour deposition (PVD) and chemical vapour deposition (CVD). PVD requires particles to be vaporized and deposited to a substrate in vacuum. Thermal stability is required at the required temperatures to vaporize the particles without thermal degradation. CVD allows coatings to be deposited without the use of solvents. This process requires gas-phase monomers to be polymerized into highly crosslinked networks on a colder substrate. This process is widely utilized in inorganic coating methods. The use of organic coatings is mainly in thin-film applications for electronics and packaging. The process can be utilized in low pressure or high vacuum environments depending on the chemistry used.

In another embodiment, the N-halamine-dopamine copolymers as described herein are deposited on the surface of a material using liquid deposition (e.g., brush, roll or spray). These methods may be the most commonly used industrial methods for modifying a substrate's surface. These methods consist of spraying, rolling and brushing a liquid polymer onto the substrate's surface. The application to the substrate is typically followed by drying or drying and curing process. This method covers many paint applications as well as commercial coatings products due to its simplicity and low relatively low capital requirements.

In another embodiment, the *N*-halamine-dopamine copolymers as described herein are deposited on the surface of a material using powder spray coating (PSC). PSC is a common industrial method where small particles are discharged as a spray and electrostatically adhered to a substrate's surface. The particles are then heated and allowed to melt or flow in a lower viscosity state. The coating is then able to crosslink and cure forming a solid film.

In another embodiment, the N-halamine-dopamine copolymers as described herein are deposited on the surface of a material using dipping bed (DB) and fluidized bed (FB) application. The DB method is well characterized, and it is one of the most basic of industrial methods. The DB method involves submersing or dipping the substrate into a bath of polymer whereby the substrate is removed at a controlled rate and any solvent is evaporated thereby completing the polymerization on the surface. DB methods can be used in conjunction with UV curing, oven curing or infrared curing. Other forms of DB methods include roll and sheet based processes where a substrate is put through any type of bath or solution. The FB method is similar to the DB method and it may be considered a variant of powder coating. With this process a heated article is placed into a fluidized powder, the powder then melts onto the substrate with a film formation based on latent heat and a desired thickness of the coating. The substrate is then removed from the tank. The process can also be used in an electrostatic fluidized bed.

A polymer which combines both *N*-halamine and dopamine functional groups to form a novel antimicrobial coating material is described herein. Dopamine groups enable the polymer to firmly adsorb on various substrate surfaces, regardless of chemical composition (metals, plastics, glasses, paints), size, or shape. *N*-halamine moieties provide potent antimicrobial functionality for the coated surface that can be "recharged" through periodical treatments with chlorine bleach. For instance, as described in the Examples herein, *N*-halamine-dopamine copolymer coated stainless steel surface completely inactivated more than 6 $\log_{10}$ CFU of both gram-positive and gram-negative bacteria within 10 minutes of contact time. Furthermore, even after 100 "discharge-recharge" cycles, the chlorine content remained sufficiently high to maintain a similar effectiveness. The coating thickness and chlorine content could be tuned by adjusting the formulation of the coating. Finally, a spray-coating method was demonstrated for applying the coating could be scaled to treat real food equipment parts. Thus, the *N*-halamine-dopamine copolymer material described herein has great potential to produce high-performance, low-cost, and easy-to-apply coatings on a plethora of surfaces for safety and preventive-control applications.

Preferences and options for a given aspect, feature, embodiment, or parameter of the invention should, unless the context indicates otherwise, be regarded as having been disclosed in combination with any and all preferences and options for all other aspects, features, embodiments, and parameters of the invention.

## EXAMPLES

The following Examples are presented to illustrate various aspects of the present application, but are not intended to limit the scope of the claimed invention.

### Materials and Methods

*N*-(1,1-Dimethyl-3-oxobutyl)acrylamide was purchased from TCI Chemical, Japan. 3,4-dihydroxyphenethylamine hydrochloride, 2,2'-azobis(2-methylpropionitrile) (AIBN), and poly(ethyleneimine) (PEI) were purchased from Sigma-Aldrich (St. Louis, MO). Polypropylene, high density polyethylene, and stainless steel 316 L were purchased from McMaster-Carr (Aurora, OH). Bacterial LIVE/DEAD kit (Invitrogen) was purchased from Life Technologies Corporation (Eugene, Oregon). All chemicals and reagents were used as received. Bacterial strains *Staphylococcus aureus* ATCC 3359 (isolated from a hospital) and *Escherichia coli* O157:H7 ATCC 43890 (isolated from human feces) were obtained from Food Microbiology Lab at Cornell University, Ithaca, NY.

### Example 1- Synthesis of the Halamine and Dopamine Monomers

***Synthesis of halamine vinyl monomer (HA).*** *N*-halamine precursor vinyl monomer hydantoin acrylamide (HA) [N-(2-methyl-1-(4-methyl-2,5-dioxoimidazolidin-4-yl)propan-2-yl)acrylamide] was synthesized following a previously reported method based on the Bucherer-Bergs reaction (Kocer et al., "N-Halamine Copolymers for Use in Antimicrobial Paints," ACS Applied Materials & Interfaces 3(8):3189-3194 (2011)). Briefly, *N*-(1,1-Dimethyl-3-oxobutyl)acrylamide (TCI, Japan), potassium cyanide, and ammonium carbonate in a 1:2:6 M ratio in a water/ethanol (1:1 by volume) solvent mixture was stirred in a round flask room temperature for 4 days. After evaporation of the ethanol, the crude product was isolated by exposure to dilute HCl followed by filtration. The product was obtained as a white powder having a melting point of 178 °C and a yield of 89%. Its structure was confirmed by NMR, FT-IR, and mass spectroscopy.

***Synthesis of dopamine vinyl monomer (DMA).*** Dopamine vinyl monomer dopamine methacrylamide (DMA) was synthesized following a previous method described in Lee et al. "Mussel-Inspired Surface Chemistry for Multifunctional Coatings," Science 318(5849):426-430 (2007)). In brief, the reaction media was prepared in 100 ml of distilled water by adding 10 g of sodium borate and 4 g of sodium bicarbonate in order to protect the dihydroxy benzene moiety. Both sodium borate and sodium bicarbonate were saturated in water and demonstrated some insolubility. The aqueous solution was degassed with bubbling nitrogen for 20 minutes, and 5 g of 3,4-dihydroxyphenethylamine hydrochloride was added to this solution. Methacrylate anhydride solution (4.7 ml) in 25 ml of tetrahydrofuran (THF) was prepared separately and added dropwise into the aqueous solution containing 3,4-dihydroxyphenethylamine hydrochloride. The pH of the prepared solution was checked with pH indication paper. To keep the reaction mixture moderately basic (pH 8 or above) 1M NaOH solution was added dropwise. The reaction mixture was stirred for 14 hours at room temperature with nitrogen bubbling. At this time, a white slurry-like solution had formed and was then washed twice with 50 ml of ethyl acetate. The resulting solid in the solution was vacuum filtered and the obtained aqueous solution was acidified to pH 2 with 6M of HCl solution. The organic layer of the solution was extracted three times from the acidified aqueous solution with 50 ml of ethyl acetate. The extracted clear brown organic layer in the ethyl acetate was dried over MgSO4. The solution volume was reduced to 25 ml with a rotary evaporator. The obtained solution was added to 250 ml of hexane with vigorous stirring to precipitate a brownish solid and then the formed suspension was refrigerated to maximize crystal formation size. To purify, the resulting light brown solid was dissolved in 20 ml of ethyl acetate and precipitated in 300 ml of hexane. The final solid powder was dried in a vacuum overnight.

### Example 2 - Chemical Synthesis of the N-Halamine-Dopamine Copolymers

A free-radical polymerization method was used to prepare the *N*-halamine-dopamine copolymers. For polymerization, 100% MeOH (20 mL) was used as the solvent, HA (7 mmol) and DMA (3 mmol) were used as monomers, and AIBN [2,2'-azobis(2-methylpropionitrile)] (40 mg) was used as an initiator. The reaction mixture was bubbled with nitrogen gas for 20 min to remove oxygen. The polymerization occurred at 60 °C for 3 h. After cooling to room temperature, a white sticky polymer precipitated out in the bottom of flask and was collected. The polymer was further washed using hot MeOH. The wet polymer product was then dissolved in 80% EtOH at 100 mg/mL as a stock solution and stored in the refrigerator. The polymers were characterized with $^1$H NMR, FT-IR (Fourier-transform infrared spectroscopy, Bruker Vertex V80V vacuum FTIR system), and GPC (gel permeation chromatography, Waters Ambient Temperature GPC:DMF). Fig. 1 shows an illustration of the synthesis of the *N*-halamine-dopamine copolymers of the present application.

**Example 3 - Dip-coating and *N*-Halamine Activation**

A dip-coating method was used to coat the *N*-halamine-dopamine copolymer composition on various substrates, and chlorination was used to activate the *N*-halamine moieties (Fig. 2). A working solution of *N*-halamine-dopamine polymer (poly1, HA-*co*-DMA, HA: DMA=7:3) at 2 mg/mL was prepared from the stock solution using 80% EtOH as the solvent. To test the coating adhesion, five different material substrates including 316 L stainless steel, plastics (PP, PVC, HDPE), and glasses were cut into one-square-inch coupons and cleaned with DI water. Next, the coupons were immersed in the coating solution for 3 hours. After that, the coupons were washed briefly with 80% EtOH to remove any non-bonded or loosely attached polymer molecules and dried in a fume hood for at least 2 hours. The poly1-coated coupons were chlorinated through treatment with 10% bleach solution (8.25% hypochlorite, pH adjusted to 7.0 with HCl and available chlorine content ~ 4000 ppm) for 30 min, washed thoroughly with DI water to remove any free chlorines on the surface, and dried overnight in fume hood. The coatings were characterized with contact-angle goniometer (Rame-Hart) and XPS (X-ray photoelectron spectroscopy).

**Example 4- Surface Chlorine Titration**

The immobilized oxidative chlorine content (*N*-halamine) on the surface of *N*-halamine-dopamine polymer coated coupons was determined using an iodometric/thiosulfate titration method (Qiao et al., "N-Halamine Modified Thermoplastic Polyurethane with Rechargeable Antimicrobial Function for Food Contact Surface," RSC Advances 7(3):1233-1240 (2017)). In brief, two coupons (1 $in^2$) were put into a flask containing potassium iodine (KI), water, and HCl, and the coupons were stirred at room temperature for 10 min. Next, the resulting solution was added with 0.5% starch solution and titrated by sodium thiosulfate. The oxidative chlorine content was calculated using the following formula:

$$[Cl^+]\ (\mu g/cm^2) = (N \times V \times 35.5)/2A$$

where *N* and *V* are the normality (equiv·$L^{-1}$) and volume (L) of the titrant sodium thiosulfate and *A* is the total surface area of titrated sample ($cm^2$). Three groups were repeated for coupons of each material.

To investigate the coating stability and rechargeability, stainless steel samples were used for titration. After first chlorination and titration (R0), the samples were retrieved, washed thoroughly with DI water, and chlorinated with same condition as described earlier, and this process was defined as one "discharge-recharge" cycle (R1). This process was repeated for an additional nine times and the resulting SS coupons were designated as R10. Since the high concentration bleach treatment step is the most critical in the detaching of the coating from the surface, the period of chlorination treatment in one cycle (10% bleach, 30 min) was used to represent one "recharge-discharge" cycle and to investigate the coating stability on surface after 10 recharge cycles.

**Example 5 - Surface Biocidal Efficacy Test**

The biocidal efficacy of *N*-halamine-dopamine coated stainless steel surfaces was determined using a "sandwich" contact-kill testing method as described previously (Qiao et al., "N-Halamine Modified Thermoplastic Polyurethane with Rechargeable Antimicrobial Function for Food Contact Surface," RSC Advances 7(3):1233-1240 (2017)). A gram-negative bacterium of *E. coli* O157:H7 and a gram-positive bacterium of *S. aureus* were used in this study. A single colony of each bacteria was transferred into 15 mL of Brain heart infusion (BHI) broth and incubated at 37 °C for 16 h. The culture was pelleted through centrifugation, washed twice with Butterfield's phosphate buffer (BPB), and finally re-suspended in BPB buffer. The bacterial population density was estimated by the $O.D._{640\ nm}$ and an inoculum was prepared. A 25 μL aliquot of the inoculum (~ $4 \times 10^7$ CFU/mL bacteria) was added to the center of the square coupon, a second identical coupon was placed on the sample and the sandwich was compressed with a sterile weight to ensure complete contact with inoculated bacteria. At the contact times of 10, 30, and 60 min, the coupons were transferred into 5 mL of $Na_2S_2O_3$ solution (0.05 N) and vortexed vigorously to quench any oxidative chlorine residuals and to detach surviving bacteria from the sample. Ten-fold serial dilutions were made for all samples and each dilution was plated on Trypticase soy agar plates. The plates were incubated at 37 °C for 48 h and bacterial colonies were enumerated and recorded for biocidal efficacy analysis. The number of bacteria (CFU/sample) of inoculum and the number of bacteria at each contact time were calculated as shown below: bacterial number ($log_{10}$CFU/sample) = $log_{10}$ [(bacterial counts on agar plate × dilution factor × 5 mL)/(0.025 mL)].

The rechargeable antimicrobial function was determined using the same "sandwich" method, but only gram-positive bacteria *S. aureus* were inoculated. After the first antimicrobial test cycle (R0), all samples were retrieved and sanitized with 70% EtOH. Because all chlorines on the N-halamine coated SS surface were quenched during the

antimicrobial testing procedure (vortexing in sodium thiosulfate solution), the coating was totally "discharged" and had no antimicrobial activity. The coating was "recharged" by repeating the same chlorination procedure. These "recharged" *N*-halamine coated SS (R1) were used for the second "sandwich" test following the same procedures. The same procedure was repeated for one more time and the result was recorded as R2.

**Example 6 - Bacterial Inhabitation Prevention Test**

To investigate the comprehensive antimicrobial control effect of coated surfaces under organic load, a bacterial inhabitation prevention test was performed according to a previously published method with some modifications (Bastarrachea et al., "Antimicrobial Food Equipment Coatings: Applications and Challenges," Annual Review of Food Science and Technology 6(1):97-118 (2015)). In brief, the overnight culture of *S. aureus* was prepared to make a final cell density at $10^6$ CFU/mL in LB (Luria-Bertani) medium. Next, triplicate samples ($1.5 \times 0.5$ cm$^2$) were immersed in the bacterial solution for 3 h at room temperature. The samples were then taken out, rinsed with PBS buffer, and stained with a bacterial LIVE/DEAD kit. The samples were observed via fluorescent microscopy (EVOS™ FL Cell Imaging System, Thermo Scientific) to assess bacterial viability. The wavelengths for live/dead imaging are Green Fluorescent Protein (470/22 nm) for live cells and Red Fluorescent Protein (531/40 nm) for dead cells. Only bacteria that both attached and survived on the surface emit green fluorescence (bright dots with diameter between 1-5 $\mu$m) on the surface. The density of living bacterial remaining on surface of bare stainless steel (SS-Ctrl), *N*-halamine precursor polymer coated (SS-Poly1, unchlorinated) and N-halamine polymer coated (SS-Poly1-Cl, chlorinated) was compared.

**Example 7 - Tuning Coating Thickness Through Cross-linking**

To further increase the thickness of coating, PEI was used as a cross-linking agent as described previously (Lee et al., "Mussel-Inspired Surface Chemistry for Multifunctional Coatings," Science 318(5849):426-430 (2007)). In brief, 2 mg/mL of polymer solution was prepared with 80% EtOH and 20% Tris-HCl buffer (pH 8.5) with the final pH of the solution around pH 8.0. PEI (100 mg/mL) solution was prepared in DI water. The polymer solution and PEI solution were mixed together with a molar ratio of Poly1:PEI at 1:5. Then, the solution was used for the dip-coating procedure: the samples were immersed in the solution for 10 s, taken out, and dried/cured for 1 h under fume hood. Afterward, samples were washed thoroughly with 80% EtOH to remove any loosely attached molecules. Then the samples were chlorinated under the same chlorination conditions described above. The samples were characterized via water contact angle, FT-IR, and XPS. In addition, a spray coating method was performed for poly 1 solution both with and without PEI using a mist sprayer bottle (samples were oriented vertically during spraying). The coated samples were dried/cured, cleaned, and chlorinated with the same method as dip coating. All these dip-coated and spray-coated samples were titrated for chlorine content.

**Example 8 - Scale-up and Application on Real Food Equipment**

The optimized formulation of poly1+PEI was used for coating on an actual food equipment part through spray coating. A stainless steel (304) pipe was taken directly from a food processing plant and cleaned thoroughly with soap and water. PEI formulated poly1 solution (5 mg/mL) was sprayed on the external surface using a mist sprayer and was totally dries within 5 min. After further curing in air for one hour, both coated and uncoated pipe surfaces were sprayed with 0.5% bleach and dried. The chlorination process was repeated three times to ensure sufficient chlorination. After that, the whole pipe was rinsed thoroughly with DI water to remove any free chlorine residues on the surface. To visualize oxidative chlorines on the N-halamine coated pipe, a simple method based on the mechanism of iodometric titration was used. An indicator solution containing water, acid, potassium iodine, and starch solution was prepared in-situ, and a drop of this solution was dripped on the surface. If enough oxidative chlorines were immobilized on the surface, the solution would turn from colorless into blue color within 5 s. If no oxidative chlorines immobilized were on the surface, the solution will stay colorless for at least one minute. A swabbing method was also developed in which a cotton Q-tip was dipped into the indicator solution and swabbed on the surface briefly. If the surface was successfully coated with *N*-halamine coating, the cotton change from colorless to blue color within 5 s. However, if there was no coating or the *N*-halamine was not activated, the cotton stayed colorless for at least one minute.

The antimicrobial control effect of the *N*-halamine-dopamine coating on the SS pipe was performed according to a previously reported method with some modifications (Chaitiemwong et al., "Survival of Listeria monocytogenes on a Conveyor Belt Material With or Without Antimicrobial Additives," International Journal of Food Microbiology 142(1):260-263 (2010)). In brief, the overnight-cultured bacteria (*S. aureus*) were centrifuged, washed with PBS, and resuspended in PBS (phosphate-buffered saline) to prepare a bacterial inoculum with cell density of $5 \times 10^8$ CFU/mL. A clean and sterile cotton swab was dipped into the bacteria solution and evenly spread on a surface area of 1.5 in$^2$ for both coated and uncoated regions. After one hour of contact, the surviving bacteria on surface were recovered by swabbing thoroughly with a cotton swab premoistened with BPW (buffered peptone water) solution, the cotton swab was then put

into 1 mL of BPW solution and vortexed for 2 min to detach all bacteria into the solution. After that, the solution was serial diluted and plated in TSA (Trypticase soy agar) plates. The plates were incubated at 37 °C for 24 h and bacterial colony-forming units (CFU) were recorded and compared for evaluating antimicrobial control effect. For both coated and uncoated surfaces, triplicate areas were tested in each experiment. After the first experiment (Experiment1), the pipe was sanitized thoroughly with 70% EtOH and washed thoroughly with a light duty scrub sponge (Scotch-Brite™, 3M) using tap water. Then the surface was treated with 0.5% chlorine bleach, dried, rinsed thoroughly and stored overnight for the next experiment (Experiment2). This procedure was repeated three times in total on three different days, and the results were recorded as Experiment 1, 2, and 3, respectively. The results of triplicate experiments were combined. The significance of difference ($P < 0.05$) in the numbers of *S. aureus* survived on the coated and uncoated surfaces was determined with ANOVA and a general linear model using SPSS for Windows 7.

**Discussion of Examples 1-7**

The *N*-halamine-dopamine copolymer p(HA-*co*-DMA) was characterized through NMR and FT-IR. In the NMR spectrum (Fig. 3A), the characteristic peaks of both HA ($\delta$ 10.7 ppm, N-H) and DMA ($\delta$ 6.25-6.75 ppm, catechol) were observed in the polymer chain yet the double bond in each monomer ($\delta$ 5.5-6.0 ppm) disappeared, confirming that a pure polymer containing *N*-halamine and dopamine groups was obtained. The HA and DMA ratio in the polymer chain was calculated by integrating the peaks in the NMR spectrum to be 7:3, which was consistent with the designed feeding ratio of HA and DMA monomers (7:3). According to previous reports, a DMA content of 20-30% was typically sufficient to provide an adhesive effect (Glass et al., "Enhanced Reversible Adhesion of Dopamine Methacrylamide-Coated Elastomer Microfibrillar Structures Under Wet Conditions," Langmuir 25(12):6607-6612 (2009)), and therefore the obtained p(HA-*co*-DMA) was expected to have sufficient adhesion based on the molecular composition. In addition, GPC results showed that the polymer had molecular weight $M_n$=11,957 and $M_w$=18,225, with PDI (polydispersity) = 1.52. The FT-IR spectrum (Fig. 3B) showed the characteristic peaks of hydantoin (1767 and 1718 $cm^{-1}$) and dopamine groups (1519 $cm^{-1}$). Combined, these data indicated that a*N*-halamine-dopamine functionalized polymer was successfully synthesized. The final polymer product was soluble in a 70-87% EtOH/$H_2O$ solution, which is a convenient solvent for formulating a quick-to-dry, easy-to-apply, and safe coating solution for industrial applications.

316L grade stainless steel was successfully coated with the *N*-halamine-dopamine polymer through dip coating. As shown in Fig. 3C, after coating, the surface contact angle of the stainless steel decreased from 72 $\pm$ 8° to 59 $\pm$ 3°, indicating an increase in surface hydrophilicity. The coating composition was investigated further using XPS (Fig. 3D). The appearance of a nitrogen peak (399 eV) on SS-Poly1 (p(HA-*co*-DMA) coated SS provided an evidence that the stainless-steel coupon had been coated with the polymer. Furthermore, the nitrogen peak remained after aggressive chlorination treatment (10% bleach for 30 min), suggesting that the adherence of the coating was relatively strong. XPS also confirmed that activation of the *N*-halamine had been achieved (Fig. 3D). While no $Cl_{2p}$ peak (200 eV) was observed on bare stainless steel (SS-Ctrl) and *N*-halamine precursor polymer coated SS (SS-Poly1), a $Cl_{2p}$ peak (200 eV) was observed after treating with chlorine bleach. In addition, the $N_{1s}$ peaks shifted and changed shape after chlorination suggesting that the N-H bond (*N*-halamine precursor) was transformed into an N-Cl bond (*N*-halamine). It should be noted that the N-H groups in dopamine could also be transformed into *N*-halamine (N-Cl), which might contribute to part of the oxidative chlorine content. The coating thickness was estimated via ellipsometry to be between 10 nm (on silicon wafer) to 50 nm (on stainless steel) depending on the chemical composition of the coating material. SEM micrographs of the surface were also shown in Figs. 4A-4D, and provided additional evidence for successful coating on the stainless-steel surface.

To assess the adhesiveness endowed by the dopamine functional groups, an indirect, yet simple method based on titration was used. Because titration determines oxidative chlorines on the surface and chlorine content is positively correlated to the polymer content on the surface, at a certain range, chlorine content on the surface can be used to indicate the quantity of coating polymers attached on the surface. As shown in Fig. 5A, for all five different materials tested, PP (polypropylene), HDPE (high density polyethylene), SS (stainless steel), PVC (polyvinyl chloride), and glass, the chlorine content ([$Cl^+$]) of each material was within the similar range of $2.0\text{-}5.0\times10^{15}$ atoms/$cm^2$. Furthermore, the coated and chlorinated stainless-steel coupons (R0) were quenched ("discharged"), re-chlorinated ("recharged", R1) and titrated again under the same conditions. Each material adsorbed the similar amount of chlorine on the surface (Fig. 5A), indicating that the *N*-halamine-dopamine polymers had remained strongly adhered to the surface. The diversity of the material types to which the polymer was found to adhere suggested that the polymer could act as a virtually universal coating regardless of surface chemistry. In addition, the dip-coating methodology was rapid (completed within 5 minutes for stainless steel) and flexible, able to coat virtually any geometry. Since no special surface treatments were required for this coating method, it is likely to be more easily scalable at a lower cost compared with previously reported methods that were based on layer-by-lay or grafting methods (Demir et al., "Polymeric Antimicrobial N-Halamine-Surface Modification of Stainless Steel," Industrial & Engineering Chemistry Research 56(41):11773-11781 (2017); Bastarrachea et al., "Antimicrobial Coatings with Dual Cationic and N-Halamine Character: Characterization and Biocidal Efficacy," Journal of Agricultural and Food Chemistry 63(16):4243-4251 (2015)).

One of the most attractive properties of *N*-halamine is its "rechargeable" antimicrobial function (Hui et al., "Antimicrobial N-Halamine Polymers and Coatings: A Review of Their Synthesis, Characterization, and Applications," Biomacromolecules 14(3):585-601 (2013)). As shown in Fig. 5B, the chlorine content decreased from $4.0\times10^{15}$ atoms/cm$^2$ to $3.0\times10^{15}$ atoms/cm$^2$ after 10 "discharge-recharge" cycles on the SS substrate. This result indicated that while a certain amount of coating polymers detached from the coating surface after ten cycles of aggressive bleach treatment, the remaining layer was strongly attached to the surface. This strong adhesive effect can be explained by the fact that catechol structure within dopamine group can form covalent bonds on solid surfaces, especially metals (Lee et al., "Mussel-Inspired Surface Chemistry for Multifunctional Coatings," Science 318(5849):426-430 (2007)). This also indicates that the coating is sufficiently robust to withstand periodic treatment of bleach and sanitation washing in real applications.

Previously, studies on *N*-halamine commonly used oxidative chlorine content for predicting antimicrobial function. Contact killing tests showed significant antimicrobial function when the chlorine content was titratable with the iodometric-thiosulfate method (> $10^{15}$ atoms/cm$^2$). As shown in Fig. 6A, after 1 h of contact, there were 5.0-6.0 $\log_{10}$ CFU/cm$^2$ of *S. aureus* and *E. coli* O157:H7 remaining on the surface of bare stainless steel (SS-Ctrl) as well as the SS coated with the N-halamine precursor polymer (SS-Poly1). This is inconsistent with the designed inoculation level of $1\times10^6$ CFU/sample (1 in$^2$). However, after activating the *N*-halamine with chlorine, the surface inactivated all inoculated *S. aureus* (gram-positive) and *E. coli* O157:H7 (gram-negative) bacteria (> 6 $\log_{10}$CFU/cm$^2$) to a level under the detection limit (1.87 $\log_{10}$CFU/sample) within as short as 10 min of contact. To confirm that this potent antimicrobial function was "rechargeable", the surfaces were "recharged" and subjected to two more antimicrobial tests. The N-Cl group is the key for bacterial killing and the mechanism has been reported previously (Dong et al., "Chemical Insights into Antibacterial N-Halamines," Chemical Reviews 117(6):4806-4862 (2017)). In principle, the oxidative power of "$Cl^+$" from the N-Cl will cause damage to the cell wall, similar to the oxidative chlorines in hypochlorite ($ClO^-$). The "$Cl^+$" is expected to be reduced and released from the bond as chloride "$Cl^-$" after killing bacteria. This is the main reason for recharging the coating with hypochlorite ($ClO^-$). Since it has been reported that the antimicrobial function of *N*-halamine is non-specific (effective against bacteria, fungi, yeast, virus, endospores, etc.) (Dong et al., "Chemical Insights into Antibacterial N-Halamines," Chemical Reviews 117(6):4806-4862 (2017); Cao et al., "Polymeric N-Halamine Latex Emulsions for Use in Antimicrobial Paints," ACS Applied Materials & Interfaces 1(2):494-504 (2009)), only *S. aureus* was used for the following test. As shown in Fig. 6B, a similar trend was observed for both SS-Ctrl and SS-Poly1 samples, confirming the consistency of the experimental method. Within the first three "charging" cycles, the N-halamine coated surface was able to inactivate more than 6 $\log_{10}$ CFU/cm$^2$ of inoculated bacteria to a level under detection limit (1.87 $\log_{10}$ CFU/cm$^2$). This was also in good agreement with the titration results that the chlorine content remained stable within the initial three cycles (R0, R1, R2). All these results combined confirmed that the *N*-halamine modified surface exhibited potent and non-specific antimicrobial function, and the antimicrobial function could be "recharged" through treating the surface with chlorine bleach. By contrast, other previously developed materials (e.g. silver alloy/composites compounded polyurethane conveyor belt) only achieved a 2-3 log reduction within 24 h of contact (Chaitiemwong et al., "Survival of Listeria Monocytogenes on a Conveyor Belt Material With or Without Antimicrobial Additives," International Journal of Food Microbiology 142(1):260-263 (2010)).

The "sandwich" test is only effective to measure the ability of surfaces to kill bacteria that are already on the surface. It does not provide any information about the ability of the surface to resist the attachment and proliferation of bacteria from solution. Therefore, additional tests to evaluate the attachment and survival of bacteria on a coated surface form solution were also performed. Combined with the "sandwich" test data, these results are likely to provide a better predictor of performance than the "sandwich" test alone. As shown in Fig. 7, after 3 h of incubation in LB medium, many bacteria attached and survived on bare stainless steel (SS-Ctrl) and *N*-halamine precursor coated stainless steel (SS-Poly1), and bacterial aggregates were observed on the surfaces (bright florescent dots with diameter between 1-5 $\mu$m represent attached and survived bacteria). However, for *N*-halamine activated coating samples, almost no live bacteria could be observed. Since *N*-halamine usually has very fast killing, bacteria may be killed immediately after contacting the surface. Thus, there is little chance for bacteria attachment on the surface until the immobilized chorines on the surface are totally consumed (Dong et al., "Chemical Insights into Antibacterial N-Halamines," Chemical Reviews 117(6):4806-4862 (2017); Cao et al., "Polymeric N-Halamine Latex Emulsions for Use in Antimicrobial Paints," ACS Applied Materials & Interfaces 1(2):494-504 (2009)). This is different from the situation where bacteria colony or biofilm are already formed, and dead cells will still attach to the surface after treatment. Although there could also be some synergistic effect from the polymer coating that can prevent attachment onto the surface, the antimicrobial killing from *N*-halamine plays the major role. This was confirmed with another study of *N*-halamine on stainless steel (Demir et al., "Polymeric Antimicrobial N-Halamine-Surface Modification of Stainless Steel," Industrial & Engineering Chemistry Research 56(41):11773-11781 (2017)). The results showed that *N*-halamine exhibits excellent antimicrobial effects for at least 3 hours under organic loads (LB medium contains protein and amino acids from peptone and yeast extract). This observation is consistent with previous results that *N*-halamine compounds exhibit excellent biocidal function under heavy organic loads including TSB (Tryptic soy broth), meat exudes, and chicken litter (Tian et al., "Realizing Ultrahigh Modulus and High Strength of

Macroscopic Graphene Oxide Papers Through Crosslinking of Mussel-Inspired Polymers," Advanced Materials 25(21):2980-2983 (2013); Ryu et al., "Catechol-Functionalized Chitosan/Pluronic Hydrogels for Tissue Adhesives and Hemostatic Materials," Biomacromolecules 12(7):2653-2659 (2011); Cao et al., "Polymeric N-Halamine Latex Emulsions for Use in Antimicrobial Paints," ACS Applied Materials & Interfaces 1(2):494-504 (2009)). However, it is acknowledged that the 3 h contact period could only give information of a relative short-term organic load challenge. Longer times (> 3 h) were not tested in this study because the coating was primarily for non-food contact surface applications. These surfaces were not likely to be continually challenged with a heavy organic load for a long period of time (> 3 h) in real applications. In addition, the antimicrobial function may also contribute in part from the fact that the surface was covered by polymer coating, which also changed the surface topography and surface tension, all these factors may also affect the attachment the bacteria on the surface.

Because this coating technology was designed to be directly translatable for the application in an industrial environment, its scalability was a key concern. Conveniently, this coating material can be applied to surfaces through spray coating. Compared with previous reports, the chlorine content of the polymer coating of the present application is still relatively low. This is because the coating is very thin due to the method of application (dip coating). There are several ways to improve the chlorine content, including increasing chlorination time or increasing the coating thickness. Dip coating is limited to producing a single layer (10-100 nm) of polymer coating on the surface. To increase the thickness and thus achieve a chlorine content at the level of $10^{16}$-$10^{17}$ atoms/cm$^2$, the inventors took advantage of the fact that dopamine group can also be crosslinked (Fig. 8A). Catechol moieties in the dopamine structure can react with polyetherimide (PEI) through Michael addition and Schiff-base formation to generate a cross-linked structure (covalent bonds) (Tian et al., "Realizing Ultrahigh Modulus and High Strength of Macroscopic Graphene Oxide Papers Through Crosslinking of Mussel-Inspired Polymers," Advanced Materials 25(21):2980-2983 (2013); Ryu et al., "Catechol-Functionalized Chitosan/Pluronic Hydrogels for Tissue Adhesives and Hemostatic Materials," Biomacromolecules 12(7):2653-2659 (2011)). In this study, the successful incorporation of PEI into the dopamine-halamine coating matrix was confirmed through XPS (Fig. 8B) and FT-IR (Fig. 8C). XPS showed that within the PEI cross-linked polymer matrix, the nitrogen content increased, indicating high nitrogen content compared with HA-co-DMA. The FT-IR spectra showed the characteristic peaks of PEI at 3272 and 1450 cm$^{-1}$ in the cross-linked coating. Also, the peaks at 1601 and 1637 cm$^{-1}$ identified the presence of -C=C- and -C=N- bonds respectively, additional evidence of crosslinking. Interestingly, it was observed that, after adding PEI into the formulation, the coating changed from colorless to reddish brown color (Fig. 8C) and the contact angle further decreased to around 46 $\pm$ 4° probably due to the increase in the number of N-H and -$NH_2$ groups. Titration results confirmed that the cross-linked coating had a higher capacity for binding chlorine. This could be explained by more *N*-halamine precursor polymer (HA-co-DMA) molecules were attached onto the surface, which resulted in thicker coating. In the case of dip coating, the chlorine content of the PEI cross-linked coating increased almost more than two-fold compared to the pristine coating, reaching $10^{16}$ atoms/cm$^2$. In the case of spray coating, reached an even higher value. Spray coating without PEI had chlorine content of $2\times10^{16}$ atoms/cm$^2$ while the PEI cross-linked coating had chlorine content of $4\times10^{16}$ atoms/cm$^2$. The chlorine content could be increased further by tuning several other parameters including polymer concentration, spray-coating times, chlorination conditions, or number of coating layers, etc.

The coating was applied onto a metal pipe as a sample piece of real food processing equipment. To simulate realistic conditions, the metal pipe was taken directly from a food processing plant and the surface was scrubbed to damage it, as such defects have a higher tendency to harbor microorganisms (Figs. 9A-9E). As shown in Fig. 9B, the coating was applied via the spray coating method resulting in a darker color. Although in initial experiments a 10% bleach solution was used to activate the N-halamine, a lower concentration is more commonly used to sanitize surfaces in food processing plants. Therefore 0.5% bleach (about 200-300 ppm of free chlorine) was sprayed to chlorinate the surface. The coated layer was more hydrophilic than the bare metal pipe allowing the bleach to uniformly wet the entire surface. Since a low concentration of bleach (200-300 ppm available chlorines) was used, and it took only 10 min until the coated part was fully dried, there was likely to be only a minimal effect of corrosion. In order to reduce any possible corrosion even further, the surface could be rinsed with potable water following sanitization. It was also estimated that, based on current coating method, the *N*-halamine-dopamine polymer on surface was 130 mg/m$^2$, and the final cost of manufacturing and applying this *N*-halamine-dopamine polymer would be about $2 USD/g. Thus, the final cost of applying this polymer coating would be around $0.26 USD/m$^2$. which may be considered as a relatively low cost for antimicrobial coatings.

In an industry environment it is important to ensure that the effectiveness of the coating does not diminish over time. Therefore, a facile and rapid method was designed for validating that the chlorine "recharging" process occurred correctly based on titration. An indicator solution was designed to turn blue within 5 seconds when spread on the surface if chlorine was present (Fig. 9D). For convenience, the indicator solution can be applied to a cotton swab. Upon swabbing the surface, the cotton would turn blue. In the future, a colorimetric indicator scale could provide semi-quantitative information on the chlorine concentration.

The antimicrobial effect of the coating on a real equipment part was confirmed by inoculating the surface with bacteria and measuring the number of living microbes in three separate sequential experiments (Fig. 9C). As shown in Fig. 9E, on the uncoated part of the SS pipe (SSP) about 3.0-4.0 $\log_{10}$CFU/cm$^2$ bacteria (*S. aureus*) could be recovered from

the surface after one-hour of contact. However, for *N*-halamine coated surfaces, less than 1.0 $log_{10}CFU/cm^2$ could be recovered. The antimicrobial function was improved with additional chlorination in experiment 2 and experiment 3. In experiment 3, no culturable bacteria were recovered from the N-halamine coated surface. Because in experiment 1, the coating was not sufficiently charged with 0.5% bleach, more charging cycles resulted in higher chlorine loading and better antimicrobial function. This result also confirms that the coating can sustain several cycles of sanitizing and washing without losing antimicrobial function considering the fact that the coating on pipe surface had been treated with chlorine bleach at least 9 times and washed about 15 times thoroughly with DI water during the experimental procedure.

Although *N*-halamine has been shown to perform reasonably well under conditions of high organic load, it is possible that in applications in which the coating had direct contact with food items, the antimicrobial efficacy could be reduced compared to what has been reported here. The inventors intend to perform additional studies in the future to test the antimicrobial efficacy of the coating in the presence of actual food items. However, in some areas of food manufacturing (such as zone 1 food equipment), non-food contact food equipment surfaces are not heavily soiled or fouled by organic load, and therefore, this is likely not a concern for application in these areas. In accordance with the general food plant sanitation philosophy that any improvement strategies for increasing food safety should supplement rather than replace current strategies, the coating would be implemented in addition to current sanitation methods.

The immediate next step is to test the coating in a pilot-scale food processing plant. Thus, the safety of the coating itself, not merely its efficacy is a concern. It has been widely accepted *N*-halamine and dopamine are safe structures (Zhao et al., "Efficacy of Low Concentration Neutralised Electrolysed Water and Ultrasound Combination for Inactivating Escherichia Coli ATCC 25922, Pichia Pastoris GS115 and Aureobasidium Pullulans 2012 on Stainless Steel Coupons," Food Control 73:889-899 (2017); Kocer et al., "N-Halamine Copolymers for Use in Antimicrobial Paints," ACS Applied Materials & Interfaces 3(8):3189-3194 (2011)). Historically, the biggest hinderance that prevents the application of coatings on direct food-contact surfaces is that, the coatings must be so thick to achieve a desired function that the coating will tend to flake off with time, becoming a food adulterant and cause another food safety issue. In the case of the coating of the present application, a thickness of only several hundred nanometers was needed to achieve the desired function. The data suggest that such a coating is relatively stable and unlikely to peel off the surface. However, more studies to challenge the coating under commercial food plant sanitations, such as hot and high-pressure water washing, strong acid or alkane agents, degrease agents, sanitizers (QACs), should be studied. In this application, the inventors focused on non-food contact environmental surfaces. Although this coating can also be used for food-contact surface, further toxicity studies and recognition from regulatory agencies (e.g. USFDA food contact notification program) are warranted. For food-contact surface applications, leaching of toxic products from coatings into food products needs to be considered. The only possible leaching product is chlorine or chloride; however, the amount is really small even under wet conditions (Dong et al., "Chemical Insights into Antibacterial N-Halamines," Chemical Reviews 117(6):4806-4862 (2017)). In addition, it is known that chlorine bleach has been approved for food contact surface sanitizing applications; these have been known to be safe for food contact.

In this research, a polymer was developed and designed with food industry applications in mind. This polymer coating can be applied to both food contact (working table, cutting knife, container, conveyor belts, etc.) and environmental surfaces (non-food contact equipment parts, walls, ceilings, drainages). It was shown that the coating adheres to a variety of substrates regardless of chemical composition, size, or shape. Depending on the application, different coating methods (dip-coating and spray-coating) could be chosen and the total coating procedure was achieved within 5-10 minutes for either method. Furthermore, the chlorine "charging" process could be incorporated into current sanitization procedures, thus requiring very little change in food processing protocols would be needed to implement the coating system. The inventors also demonstrated the efficacy of the coating on real food equipment parts and also developed a simple and low-cost procedure for validating the success of the coating and chlorination processes. In conclusion, the versatile and rechargeable coating material developed in this study has great potential for food safety preventive-control applications in the food industry.

## Claims

1. A copolymer comprising a polymer backbone to which *N*-halamine (HA) and dopamine (DMA) groups are covalently attached,

   wherein the HA group is selected from

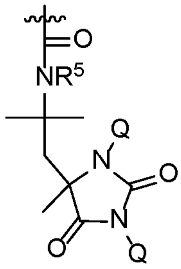 and 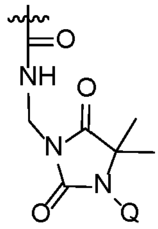 ,

where $R^5$ is H, Cl, Br, or I, and each Q is independently H, Cl, Br, or I;
wherein the DMA group is

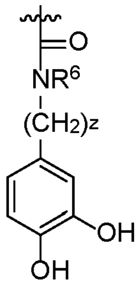 ,

where $R^6$ is H, Cl, Br, or I, and z is 2 to 6; and
wherein the HA and DMA groups are present in the copolymer in a molar ratio of 0.4:9.6 to 9.6:0.4 (HA:DMA).

2. The copolymer of claim 1, wherein the molar ratio of HA:DMA is about 7:3.

3. The copolymer of any one of claims 1or 2, wherein the *N*-halamine group is

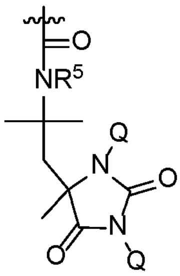 .

4. The copolymer of claim 1 further comprising polyethylene glycol groups, quaternary ammonium or zwitterion groups, or both, covalently attached to the polymer backbone by a CH or N group
wherein the copolymer comprises between 10 to 100,000 monomers comprising the HA group, the DMA group, the polyethylene glycol group, or the quaternary ammonium or zwitterion group.

5. The copolymer of claim 4, wherein the molar ratio of HA:DMA is about 7:3.

6. The copolymer of claim 4 , where the monomers of the copolymer are arranged in blocks, in a repeating pattern, or randomly.

7. The copolymer of claim 1, wherein the copolymer comprises Formula (II)

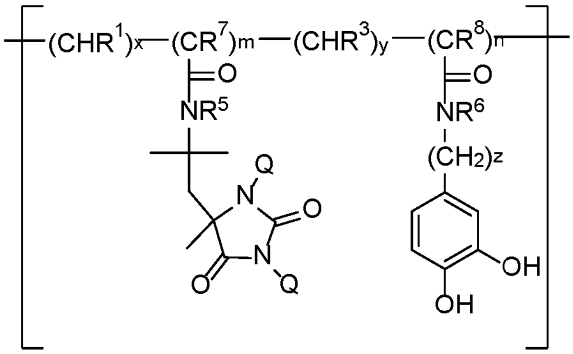

w (II)

Wherein

$R^1$ is independently H, $CH_3$, PEG, a quaternary ammonium or zwitterion;
$R^3$ is independently H, PEG, a quaternary ammonium or zwitterion;
$R^5$ is independently H, Cl, Br, or I;
$R^6$ is independently H, Cl, Br, or I;
$R^7$ is independently H or $CH_3$;
$R^8$ is independently H or $CH_3$;
Q is independently H, Cl, Br, or I;
z is independently 2 to 6;
x is independently 1 to 10;
y is independently 1 to 10;
m is independently 1 to 10;
n is independently 1 to 10; and
w is 1 to 10,000.

**8.** The copolymer of claim 7, wherein the ratio of m:n is 7:3.

**9.** The copolymer of any one of claims 1-8, wherein the copolymer has an average molecular weight ranging from 1,000 to 20,000 Da.

**10.** The copolymer of any one of claims 1-9, wherein the copolymer has a polydispersity ranging from 1.01 to 2.99, based on a ratio of Mw/Mn as determined by Gel Permeation Chromatography, where Mw is the mass-weighted molecular weight and Mn is the number weighted molecular weight.

**11.** A solution comprising a solvent and a copolymer of any one of claims 1-10 wherein the solvent comprises ethanol.

**12.** An antimicrobial composition comprising a copolymer of any one of claims 1-10.

**13.** The antimicrobial composition of claim 12, wherein the antimicrobial composition is a coating.

**14.** The anti-microbial coating of claim 13, wherein copolymer chains present in the coating are covalently bonded to metal, plastic, glass, or paint.

**15.** The anti-microbial coating of claim 13, wherein copolymer chains present in the coating are crosslinked to each other.

**16.** The anti-microbial coating of claim 15, wherein the copolymer chains are crosslinked to each other by a polyetherimide crosslinker covalently linked to catechol moieties of the DMA group.

**17.** A device or system coated with the copolymer of any one of claims 1-10, a composition of claim 12, or the antimicrobial coating of any one of claims 13-16.

**18.** The device or system of claim 17, said device or system being a food storage device, a food processing device, or a biomedical device.

**19.** The device or system of claim 17, wherein said device is coated with the antimicrobial coating at a thickness of at least 10 nm.

**20.** A process for preparing a copolymer of any one of claims 1-10, said process comprising:

providing a radically polymerizable *N*-halamine based monomer comprising the HA group;
providing a radically polymerizable dopamine based monomer comprising the DMA group;
dissolving the *N*-halamine based monomer and dopamine based monomer in a suitable solvent to form a solution of the *N*-halamine based monomer and dopamine based monomer; and
subjecting said solution to a radical polymerization reaction in the presence of a free radical initiator to form the copolymer.

**21.** The process of claim 20, wherein said solvent is selected from the group consisting of methanol, ethanol, methylene chloride, toluene, dioxane, THF, chloroform, cyclohexane, dimethyl sulfoxide, dimethyl formamide, acetone, acetonitrile, n-butanol, n-pentanol, chlorobenzene, diethylether, tert butanol, 1,2,-dichloroethylene, diisopropylether, ethanol, ethylacetate, ethylmethylketone, heptane, hexane, isopropylalcohol, isoamylalcohol, methanol, pentane, n-propylalcohol, pentachloroethane, 1,1,2,2,-tetrachloroethane, 1,1,1,-trichloroethane, tetrachloroethylene, tetrachloromethane, trichloroethylene, water, xylene, benzene, nitromethane, glycerol, and mixtures thereof.

**22.** The process of claim 20, wherein said free radical initiator is selected from the group consisting of 2,2'-azobis(2-methylpropionitrile), benzoyl peroxide, 1,1'-azobis(cyclohexanecarbonitrile), t-butylperoxide, dicumylperoxide, potassium persulfate, aralkyl halides, aryl halides 2,2-dimethoxy-1,2-diphenyl-ethan-1-one, and (2,4,6-trimethylbenzoyl)-diphenylphosphine oxide.

**23.** The process of claim 20, wherein said radical polymerization reaction occurs at a temperature ranging from 40°C to 120 °C.

**24.** A method of forming an antimicrobial coated material, said method comprising:

dissolving one or more copolymers of any one of claims 1-10 in a solvent to form a copolymer solution;
either:

(i) immersing a material into the copolymer solution for a period of time sufficient for the copolymers of the copolymer solution to bond to the material thereby forming a coated material, and removing the coated material from the copolymer solution; or
(ii) depositing the copolymer solution onto a surface of the material thereby forming a coated material;

optionally allowing the coated material to dry; and
treating the coated material with a second solution comprising a halogen.

**25.** The method of claim 24, wherein the halogen of the second solution is selected from chlorine, bromine, or iodine.

**26.** The method of claim 24, wherein the second solution comprising a halogen-is a bleach solution, a calcium hypochlorite solution, a N-chlorosuccinimide solution, a sodium dichloroisocyanurate solution, a trichloroisocyanuric acid solution, a tertiary butyl hypochlorite solution, a N-chloroacetamide solution, or a solution of *N*-chloramine.

**27.** The method of claim 24, wherein said depositing is carried out by spraying, rolling or brushing the copolymer solution onto the surface of the material.

**28.** The method of claim 24, further comprising:
adding a crosslinking agent to the copolymer solution prior to said immersing.

**29.** The method of claim 27, wherein the molar ratio of crosslinking agent to copolymer in the copolymer solution ranges from 1:10 to 10:1.

## Patentansprüche

1. Copolymer, umfassend ein Polymergrundgerüst, an das *N*-Halamin (HA) und Dopamin (DMA) kovalent gebunden sind,

   wobei die HA-Gruppe aus

   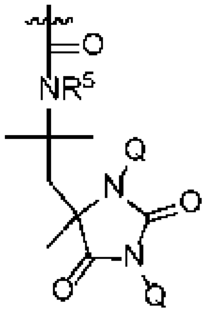

   und

   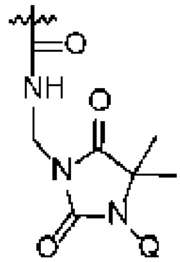

   ausgewählt ist,
   wobei $R^5$ H, Cl, Br oder I ist und jedes Q unabhängig voneinander H, Cl, Br oder I ist;
   wobei die DMA-Gruppe

   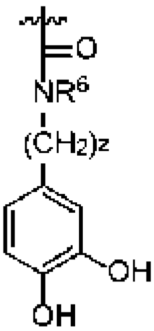

   ist,
   wobei $R^6$ H, Cl, Br oder I ist und z 2 bis 6 ist; und
   wobei die HA- und DMA-Gruppen in dem Copolymer in einem Molverhältnis von 0,4:9,6 bis 9,6:0,4 (HA:DMA) vorhanden sind.

2. Copolymer nach Anspruch 1, wobei das molare Verhältnis von HA:DMA etwa 7:3 ist.

3. Copolymer nach einem der Ansprüche 1 oder 2, wobei die N-Halamin-Gruppe

   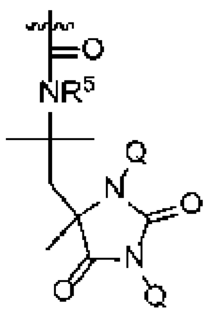

   ist.

4. Copolymer nach Anspruch 1, ferner umfassend Polyethylenglykolgruppen, quaternäre Ammonium- oder Zwitteriongruppen oder beides, kovalent an das Polymergerüst durch eine CH- oder N-Gruppe gebunden, wobei das Copolymer zwischen 10 und 100.000 Monomere umfasst, umfassend die HA-Gruppe, die DMA-Gruppe, die Polyethylenglykolgruppe oder die quaternäre Ammonium- oder Zwitteriongruppe.

**5.** Copolymer nach Anspruch 4, wobei das molare Verhältnis von HA:DMA etwa 7:3 ist.

**6.** Copolymer nach Anspruch 4, wobei die Monomere des Copolymers in Blöcken, in einem sich wiederholenden Muster oder zufällig angeordnet sind.

**7.** Copolymer nach Anspruch 1, wobei das Copolymer die Formel (II) umfasst,

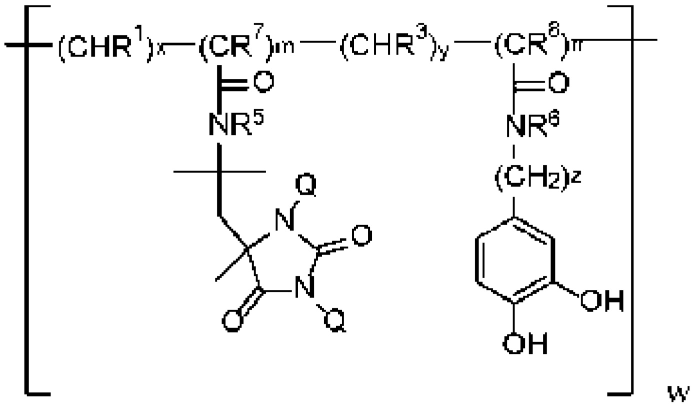

(II)

wobei

$R^1$ unabhängig H, $CH_3$, PEG, ein quaternäres Ammonium oder ein Zwitterion ist;
$R^3$ unabhängig H, PEG, ein quaternäres Ammonium oder ein Zwitterion ist;
$R^5$ unabhängig H, Cl, Br oder I ist;
$R^6$ unabhängig H, Cl, Br oder I ist;
$R^7$ unabhängig H oder $CH_3$ ist;
$R^8$ unabhängig H oder $CH_3$ ist;
Q unabhängig H, Cl, Br oder I ist;
z unabhängig 2 bis 6 ist;
x unabhängig 1 bis 10 ist;
y unabhängig 1 bis 10 ist;
m unabhängig 1 bis 10 ist;
n unabhängig 1 bis 10 ist; und
w 1 bis 10.000 ist.

**8.** Copolymer nach Anspruch 7, wobei das Verhältnis von m:n 7:3 ist.

**9.** Copolymer nach einem der Ansprüche 1 bis 8, wobei das Copolymer ein durchschnittliches Molekulargewicht im Bereich von 1.000 bis 20.000 Da aufweist.

**10.** Copolymer nach einem der Ansprüche 1 bis 9, wobei das Copolymer eine Poly-Dispersität im Bereich von 1,01 bis 2,99 aufweist, basierend auf einem Verhältnis von Mw/Mn, bestimmt durch Gelpermeationschromatographie, wobei Mw das massengewichtete Molekulargewicht und Mn das zahlengewichtete Molekulargewicht ist.

**11.** Lösung, umfassend ein Lösungsmittel und ein Copolymer nach einem der Ansprüche 1 bis 10, wobei das Lösungsmittel Ethanol umfasst.

**12.** Antimikrobielle Zusammensetzung, umfassend ein Copolymer nach einem der Ansprüche 1 bis 10.

**13.** Antimikrobielle Zusammensetzung nach Anspruch 12, wobei die antimikrobielle Zusammensetzung eine Beschichtung ist.

**14.** Antimikrobielle Beschichtung nach Anspruch 13, wobei die in der Beschichtung vorhandenen Copolymerketten kovalent an Metall, Kunststoff, Glas oder Farbe gebunden sind.

**15.** Antimikrobielle Beschichtung nach Anspruch 13, wobei die in der Beschichtung vorhandenen Copolymerketten miteinander vernetzt sind.

**16.** Antimikrobielle Beschichtung nach Anspruch 15, wobei die Copolymerketten miteinander durch einen Polyetherimidvernetzer vernetzt sind, der kovalent mit den Catecholanteilen der DMA-Gruppe verbunden ist.

**17.** Vorrichtung oder System, beschichtet mit dem Copolymer nach einem der Ansprüche 1 bis 10, einer Zusammensetzung nach Anspruch 12 oder der antimikrobiellen Beschichtung nach einem der Ansprüche 13 bis 16.

**18.** Vorrichtung oder System nach Anspruch 17, wobei die Vorrichtung oder das System eine Lebensmittellagerungsvorrichtung, eine Lebensmittelverarbeitungsvorrichtung oder eine biomedizinische Vorrichtung ist.

**19.** Vorrichtung oder System nach Anspruch 17, wobei die Vorrichtung mit der antimikrobiellen Beschichtung mit einer Dicke von mindestens 10 nm beschichtet ist.

**20.** Prozess zur Herstellung eines Copolymers nach einem der Ansprüche 1 bis 10, der Prozess umfassend:

Bereitstellen eines radikalisch polymerisierbaren Monomers auf *N*-Halaminbasis, umfassend die HA-Gruppe;
Bereitstellen eines radikalisch polymerisierbaren Monomers auf Dopaminbasis, umfassend die DMA-Gruppe;
Lösen des Monomers auf *N*-Halaminbasis und des Monomers auf Dopaminbasis in einem geeigneten Lösungsmittel, um eine Lösung des Monomers auf *N*-Halaminbasis und des Monomers auf Dopaminbasis zu bilden; und
Unterziehen der Lösung einer radikalischen Polymerisationsreaktion in Gegenwart eines Radikalinitiators, um das Copolymer zu bilden.

**21.** Prozess nach Anspruch 20, wobei das Lösungsmittel ausgewählt ist aus der Gruppe, bestehend aus Methanol, Ethanol, Methylenchlorid, Toluol, Dioxan, THF, Chloroform, Cyclohexan, Dimethylsulfoxid, Dimethylformamid, Aceton, Acetonitril, n-Butanol, n-Pentanol, Chlorbenzol, Diethylether, tert-Butanol, 1,2,-Dichlorethylen, Diisopropylether, Ethanol, Ethylacetat, Ethylmethylketon, Heptan, Hexan, Isopropylalkohol, Isoamylalkohol, Methanol, Pentan, n-Propylalkohol, Pentachlorethan, 1,1,2,2, -Tetrachlorethan, 1,1,1,-Trichlorethan, Tetrachlorethylen, Tetrachlormethan, Trichlorethylen, Wasser, Xylol, Benzol, Nitromethan, Glycerin und Mischungen davon.

**22.** Prozess nach Anspruch 20, wobei der freie Radikalinitiator ausgewählt ist aus der Gruppe, bestehend aus 2,2'-Azobis(2-methylpropionitril), Benzoylperoxid, 1,1'-Azobis(cyclohexancarbonitril), t-Butylperoxid, Dicumylperoxid, Kaliumpersulfat, Aralkylhalogenide, Arylhalogenide, 2,2-Dimethoxy-1,2-diphenyl-ethan-1-on und (2,4,6-Trimethylbenzoyl)-diphenylphosphinoxid.

**23.** Prozess nach Anspruch 20, wobei die radikalische Polymerisationsreaktion bei einer Temperatur im Bereich von 40 °C bis 120 °C stattfindet.

**24.** Verfahren zur Bildung eines antimikrobiell beschichteten Materials, das Verfahren umfassend:

Auflösen eines oder mehrerer Copolymere nach einem der Ansprüche 1 bis 10 in einem Lösungsmittel zur Bildung einer Copolymerlösung;
entweder:

(i) Eintauchen eines Materials in die Copolymerlösung für eine Zeitspanne, die ausreicht, damit sich die Copolymere der Copolymerlösung mit dem Material verbinden und dadurch ein beschichtetes Material bilden, und Entfernen des beschichteten Materials aus der Copolymerlösung; oder
(ii) Aufbringen der Copolymerlösung auf eine Oberfläche des Materials, wodurch ein beschichtetes Material entsteht;

optionales Trocknenlassen des beschichteten Materials; und
Behandeln des beschichteten Materials mit einer zweiten Lösung, umfassend ein Halogen.

**25.** Verfahren nach Anspruch 24, wobei das Halogen der zweiten Lösung ausgewählt ist aus Chlor, Brom oder Jod.

**26.** Verfahren nach Anspruch 24, wobei die zweite Lösung, umfassend ein Halogen, eine Bleichlösung, eine Calciumhypochloritlösung, eine N-Chlorsuccinimidlösung, eine Natriumdichlorisocyanuratlösung, eine Trichlorisocyanursäurelösung, eine Tertiärbutylhypochloritlösung, eine N-Chloracetamidlösung oder eine Lösung von N-Chloramin ist.

**27.** Verfahren nach Anspruch 24, wobei das Aufbringen durch Sprühen, Rollen oder Pinseln der Copolymerlösung auf die Oberfläche des Materials erfolgt.

**28.** Verfahren nach Anspruch 24, ferner umfassend:
Hinzufügen eines Vernetzungsmittels zu der Copolymerlösung vor dem Eintauchen.

**29.** Verfahren nach Anspruch 27, wobei das molare Verhältnis von Vernetzungsmittel zu Copolymer in der Copolymerlösung im Bereich von 1:10 bis 10:1 liegt.

## Revendications

**1.** Copolymère comprenant un squelette polymère auquel des groupes N-halamine (HA) et dopamine (DMA) sont liés de manière covalente,

dans lequel le groupe HA est sélectionné parmi

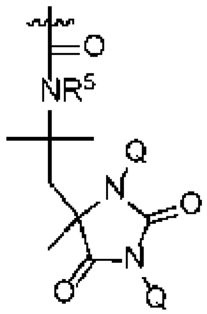

et

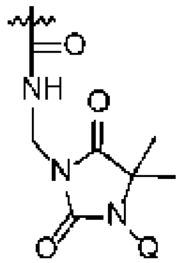

.

où $R^5$ représente H, Cl, Br ou I, et chaque Q représente indépendamment H, Cl, Br ou I ;
dans lequel le groupe DMA est

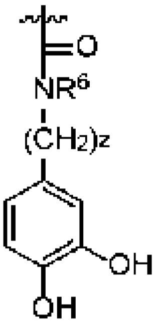

.

où $R^6$ représente H, Cl, Br ou I, et z vaut 2 à 6 ; et
dans lequel les groupes HA et DMA sont présents dans le copolymère dans un rapport molaire de 0,4:9,6 à 9,6:0,4 (HA:DMA).

**2.** Copolymère selon la revendication 1, dans lequel le rapport molaire de HA:DMA est d’environ 7:3.

**3.** Copolymère selon l’une quelconque des revendications 1 ou 2, dans lequel le groupe N-halamine est

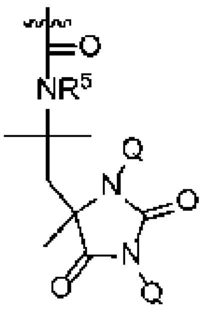

.

4. Copolymère selon la revendication 1 comprenant en outre des groupes polyéthylène glycol, des groupes ammonium quaternaire ou zwitterion, ou les deux, liés de manière covalente au squelette polymère par un groupe CH ou N. dans lequel le copolymère comprend entre 10 et 100 000 monomères comprenant le groupe HA, le groupe DMA, le groupe polyéthylène glycol ou le groupe ammonium quaternaire ou zwitterion.

5. Copolymère selon la revendication 4, dans lequel le rapport molaire de HA:DMA est d'environ 7:3.

6. Copolymère selon la revendication 4, où les monomères du copolymère sont agencés en blocs, selon un motif répétitif ou de manière aléatoire.

7. Copolymère selon la revendication 1, dans lequel le copolymère comprend la Formule (II)

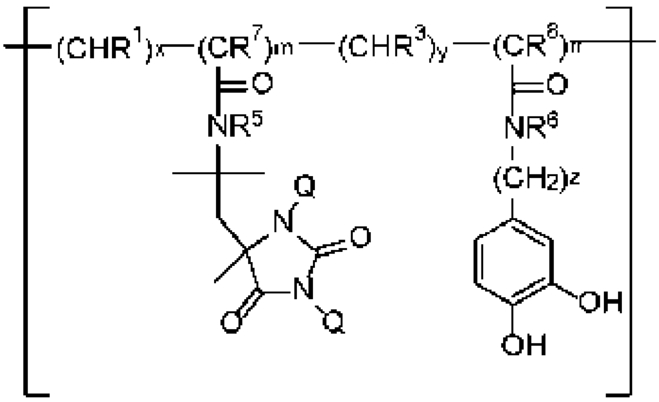

w (II)

Où

$R^1$ représente indépendamment H, $CH_3$, PEG, un ammonium quaternaire ou un zwitterion ;
$R^3$ représente indépendamment H, PEG, un ammonium quaternaire ou un zwitterion ;
$R^5$ représente indépendamment H, Cl, Br ou I ;
$R^6$ représente indépendamment H, Cl, Br ou I ;
$R^7$ représente indépendamment H, $CH_3$ ;
$R^8$ représente indépendamment H, $CH_3$ ;
Q représente indépendamment H, Cl, Br ou I ;
z vaut indépendamment 2 à 6 ;
x vaut indépendamment 1 à 10 ;
y vaut indépendamment 1 à 10 ;
m vaut indépendamment 1 à 10 ;
n vaut indépendamment 1 à 10 ; et
w vaut 1 à 10 000.

8. Copolymère selon la revendication 7, dans lequel le rapport de m:n est 7:3.

9. Copolymère selon l'une quelconque des revendications 1 à 8, dans lequel le copolymère a un poids moléculaire moyen allant de 1 000 à 20 000 Da.

**10.** Copolymère selon l'une quelconque des revendications 1 à 9, dans lequel le copolymère a une polydispersité allant de 1,01 à 2,99, sur la base d'un rapport de Mw/Mn tel que déterminé par chromatographie par perméation de gel, où Mw est le poids moléculaire pondéré en masse et Mn est le poids moléculaire pondéré en nombre.

**11.** Solution comprenant un solvant et un copolymère selon l'une quelconque des revendications 1 à 10 dans laquelle le solvant comprend de l'éthanol.

**12.** Composition antimicrobienne comprenant un copolymère selon l'une quelconque des revendications 1 à 10.

**13.** Composition antimicrobienne selon la revendication 12, dans laquelle la composition antimicrobienne est un revêtement.

**14.** Revêtement antimicrobien selon la revendication 13, dans lequel les chaînes de copolymères présentes dans le revêtement sont liées de manière covalente à du métal, du plastique, du verre ou de la peinture.

**15.** Revêtement antimicrobien selon la revendication 13, dans lequel les chaînes de copolymères présentes dans le revêtement sont réticulées entre elles.

**16.** Revêtement antimicrobien selon la revendication 15, dans lequel les chaînes de copolymères sont réticulées entre elles par un agent de réticulation polyétherimide lié de manière covalente aux fractions catéchols du groupe DMA.

**17.** Dispositif ou système revêtu du copolymère selon l'une quelconque des revendications 1 à 10, d'une composition selon la revendication 12 ou du revêtement antimicrobien selon l'une quelconque des revendications 13 à 16.

**18.** Dispositif ou système selon la revendication 17, ledit dispositif ou système étant un dispositif de stockage d'aliments, un dispositif de traitement d'aliments ou un dispositif biomédical.

**19.** Dispositif ou système selon la revendication 17, dans lequel ledit dispositif est revêtu du revêtement antimicrobien d'une épaisseur d'au moins 10 nm.

**20.** Procédé permettant de préparer un copolymère selon l'une quelconque des revendications 1 à 10, ledit procédé comprenant :

la fourniture d'un monomère à base de N-halamine polymérisable par voie radicalaire comprenant le groupe HA ;
la fourniture d'un monomère à base de dopamine polymérisable par voie radicalaire comprenant le groupe DMA ;
la dissolution du monomère à base de N-halamine et du monomère à base de dopamine dans un solvant approprié pour former une solution du monomère à base de N-halamine et du monomère à base de dopamine ; et
la soumission de ladite solution à une réaction de polymérisation radicalaire en présence d'un initiateur de radicaux libres pour former le copolymère.

**21.** Procédé selon la revendication 20, dans lequel ledit solvant est sélectionné parmi le groupe constitué de méthanol, d'éthanol, de chlorure de méthylène, de toluène, de dioxane, de THF, de chloroforme, de cyclohexane, de diméthylsulfoxyde, de diméthylformamide, d'acétone, d'acétonitrile, de n-butanol, de n-pentanol, de chlorobenzène, de diéthyléther, de tert-butanol, de 1,2-dichloroéthylène, d'éther diisopropylique, d'éthanol, d'acétate d'éthyle, de méthyl-éthyl-cétone, d'heptane, d'hexane, d'alcool isopropylique, d'alcool isoamylique, de méthanol, de pentane, d'alcool n-propylique, de pentachloroéthane, de 1,1,2,2-tétrachloroéthane, de 1,1,1-trichloroéthane, de tétrachloroéthylène, de tétrachlorométhane, de trichloroéthylène, d'eau, de xylène, de benzène, de nitrométhane, de glycérol et des mélanges de ceux-ci.

**22.** Procédé selon la revendication 20, dans lequel ledit initiateur de radicaux libres est sélectionné dans le groupe constitué de 2,2'-azobis(2-méthylpropionitrile), de peroxyde de benzoyle, de 1,1'-azobis(cyclohexanecarbonitrile), de peroxyde de t-butyle, de peroxyde de dicumyle, de persulfate de potassium, d'halogénures d'aralkyle, d'halogénures d'aryle, de 2,2-diméthoxy-1,2-diphényl-éthan-1-one et d'oxyde de (2,4,6-triméthylbenzoyl)-diphénylphosphine.

**23.** Procédé selon la revendication 20, dans lequel ladite réaction de polymérisation radicalaire se produit à une température allant de 40 °C à 120 °C.

**24.** Procédé de formation d'un matériau revêtu antimicrobien, ledit procédé comprenant : la dissolution d'un ou plusieurs copolymères selon l'une quelconque des revendications 1 à 10 dans un solvant pour former une solution de copolymère ;

soit :

(i) en immergeant un matériau dans la solution de copolymère pendant une durée suffisante pour que les copolymères de la solution de copolymère se lient au matériau, formant de ce fait un matériau revêtu, et en retirant le matériau revêtu de la solution de copolymère ; ou
(ii) en déposant la solution de copolymère sur une surface du matériau, formant de ce fait un matériau revêtu ;

éventuellement, en laissant sécher le matériau revêtu ; et en traitant le matériau revêtu avec une seconde solution comprenant un halogène.

**25.** Procédé selon la revendication 24, dans lequel l'halogène de la seconde solution est sélectionné parmi le chlore, le brome ou l'iode.

**26.** Procédé selon la revendication 24, dans lequel la seconde solution comprenant un halogène est une solution d'eau de Javel, une solution d'hypochlorite de calcium, une solution de N-chlorosuccinimide, une solution de dichloroisocyanurate de sodium, une solution d'acide trichloroisocyanurique, une solution d'hypochlorite butylique tertiaire, une solution de N-chloroacétamide, ou une solution de N-chloramine.

**27.** Procédé selon la revendication 24, dans lequel ledit dépôt est réalisé par pulvérisation, laminage ou brossage de la solution de copolymère sur la surface du matériau.

**28.** Procédé selon la revendication 24, comprenant en outre :
l'ajout d'un agent de réticulation à la solution de copolymère avant ladite immersion.

**29.** Procédé selon la revendication 27, dans lequel le rapport molaire entre l'agent de réticulation et le copolymère dans la solution de copolymère va de 1:10 à 10:1.

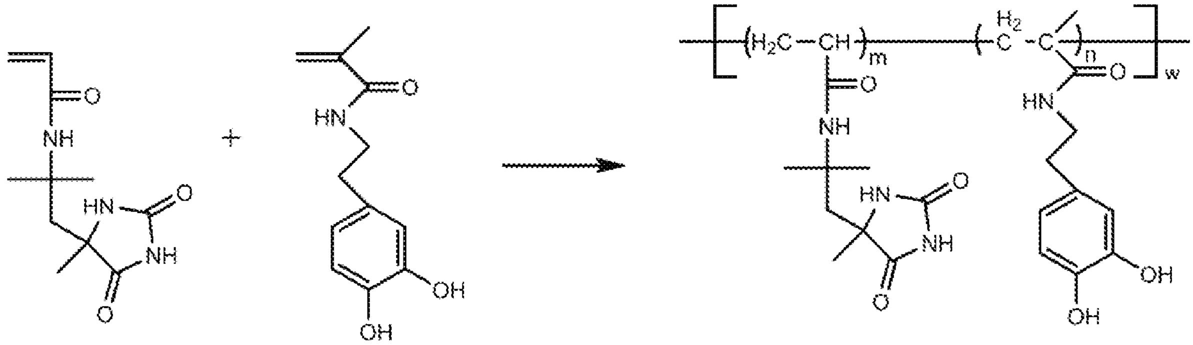

**HA** **DMA** **Poly(HA-*co*-DMA)**

*Fig. 1*

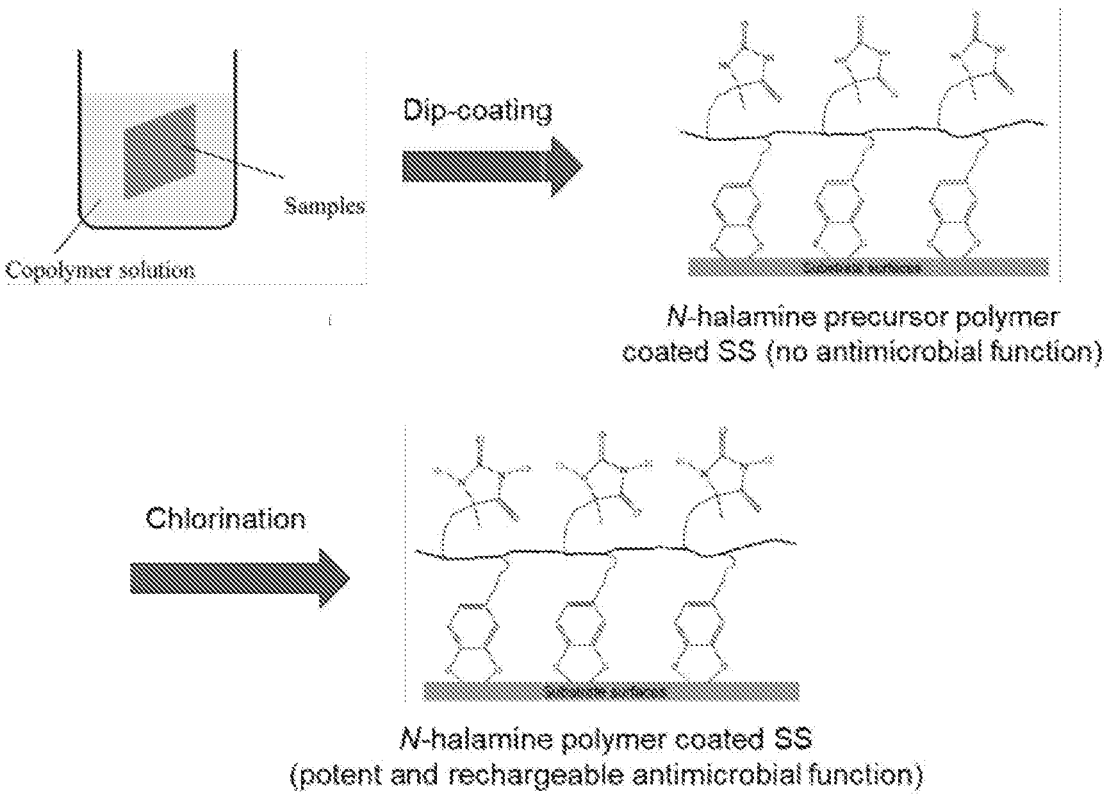


*Fig. 2*

(A)

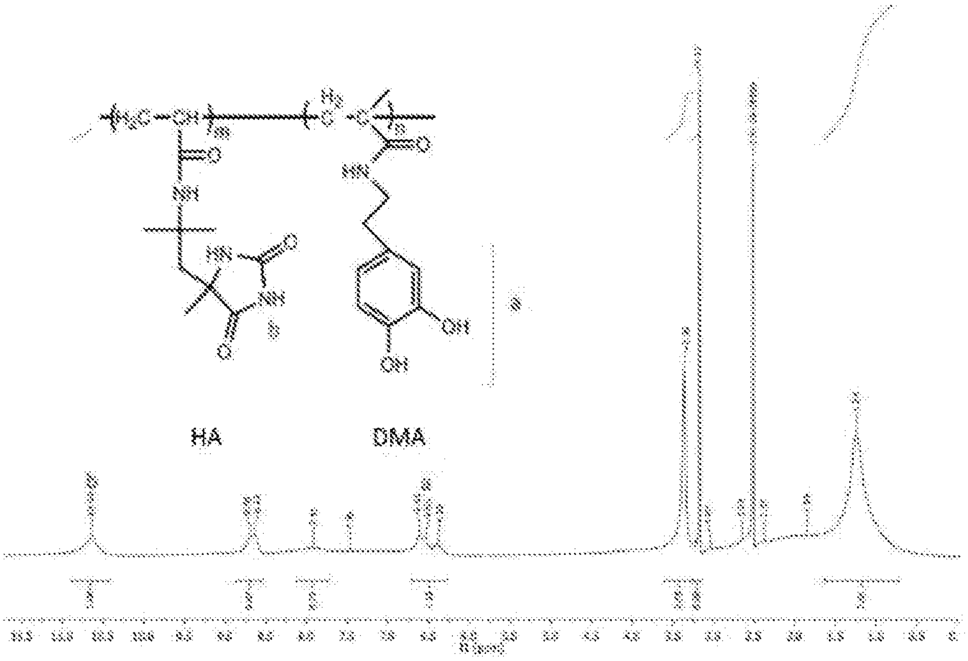

HA

DMA

(B)

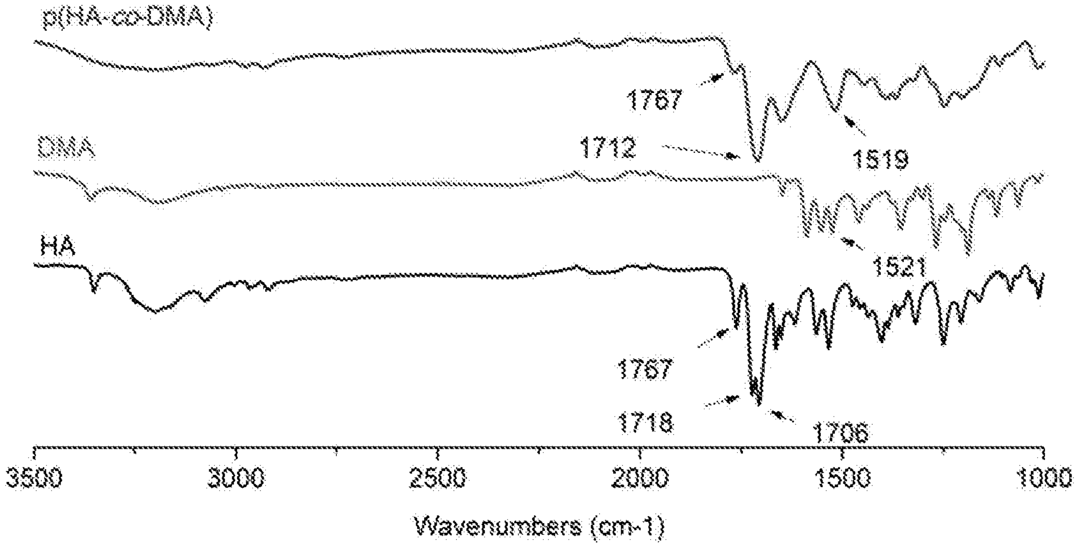


*Figs. 3A-3B*

(C)

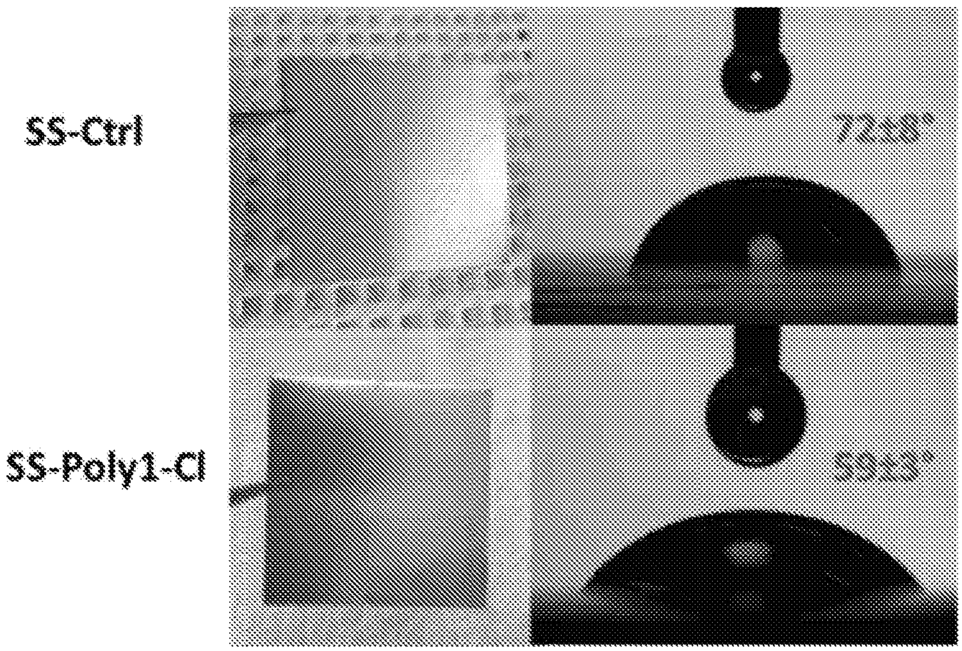
SS-Ctrl
72±8°
SS-Poly1-Cl
59±3°

(D)

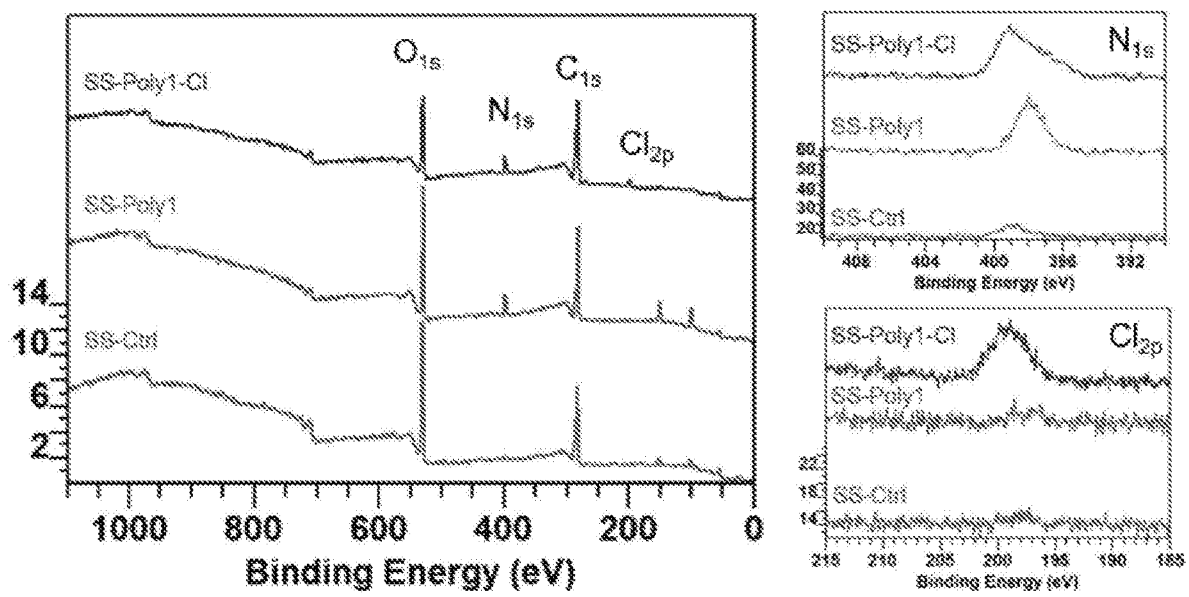
SS-Poly1-Cl
SS-Poly1
SS-Ctrl
O1s
N1s
C1s
Cl2p
Binding Energy (eV)
Binding Energy (eV)
Binding Energy (eV)

*Figs. 3C-3D*

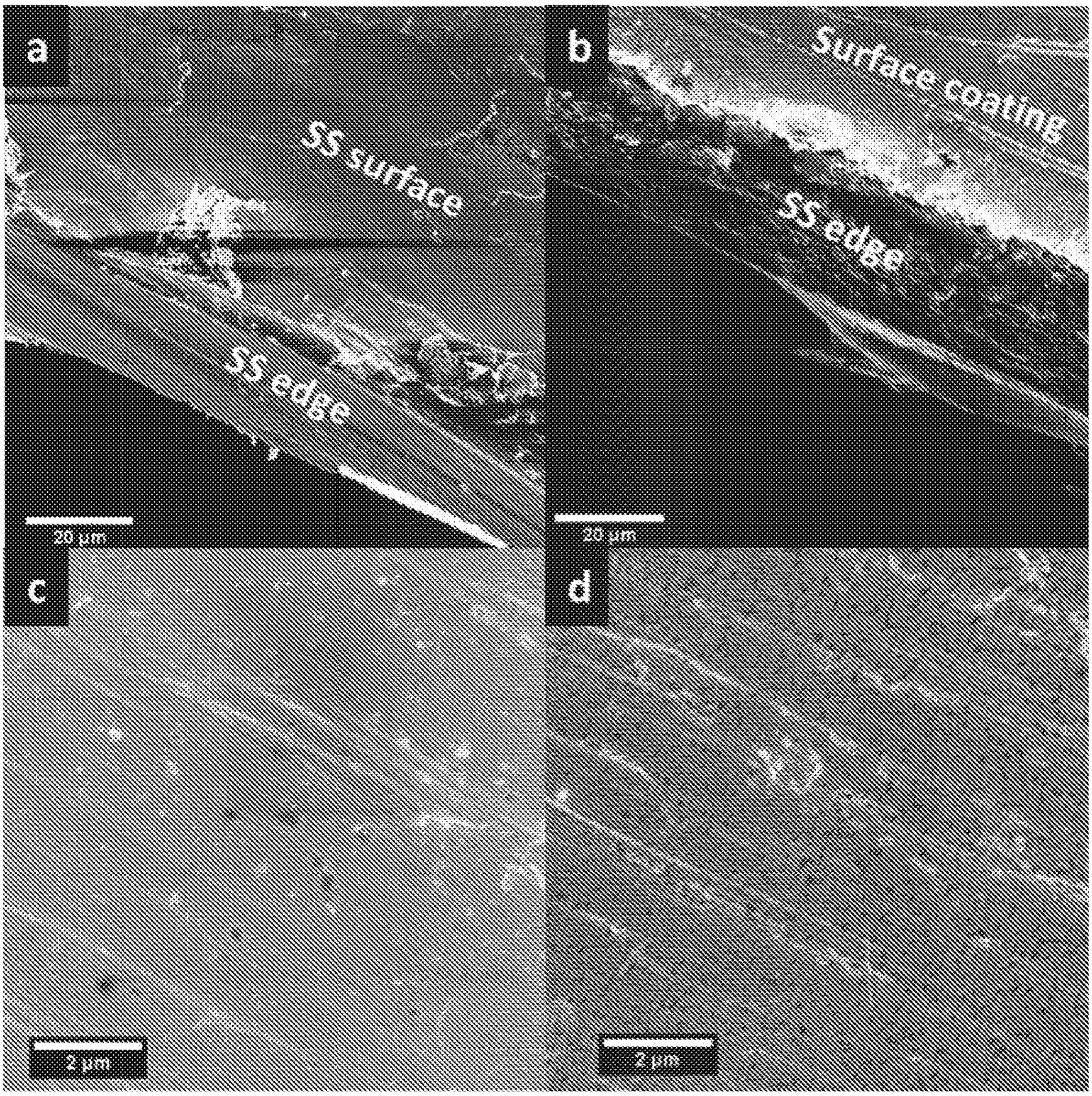
a
SS surface
SS edge
20 µm
b
Surface coating
SS edge
20 µm
c
2 µm
d
2 µm

*Figs. 4A-4D*

(A)

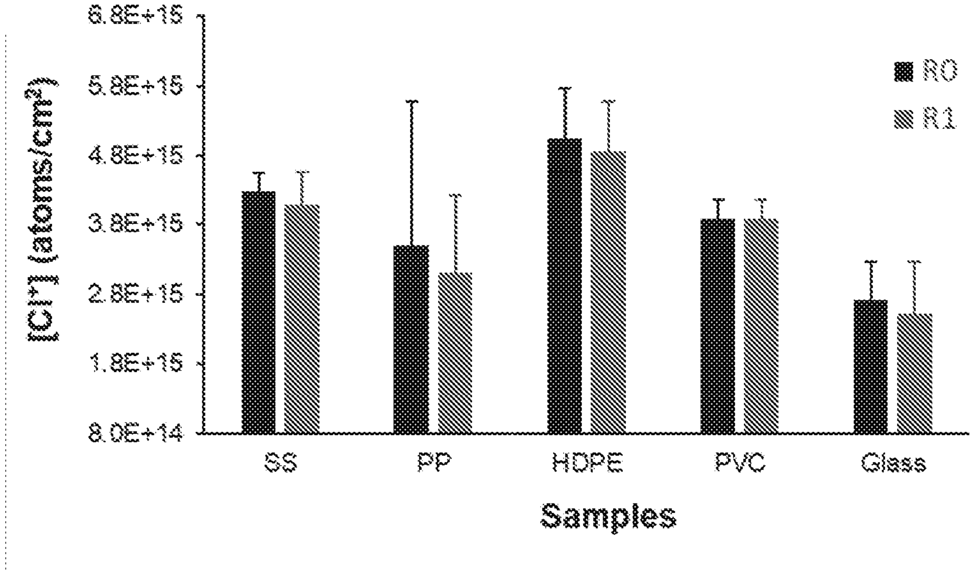

[Cl⁺] (atoms/cm²)
6.8E+15
5.8E+15
4.8E+15
3.8E+15
2.8E+15
1.8E+15
8.0E+14
R0
R1
SS
PP
HDPE
PVC
Glass
Samples


(B)

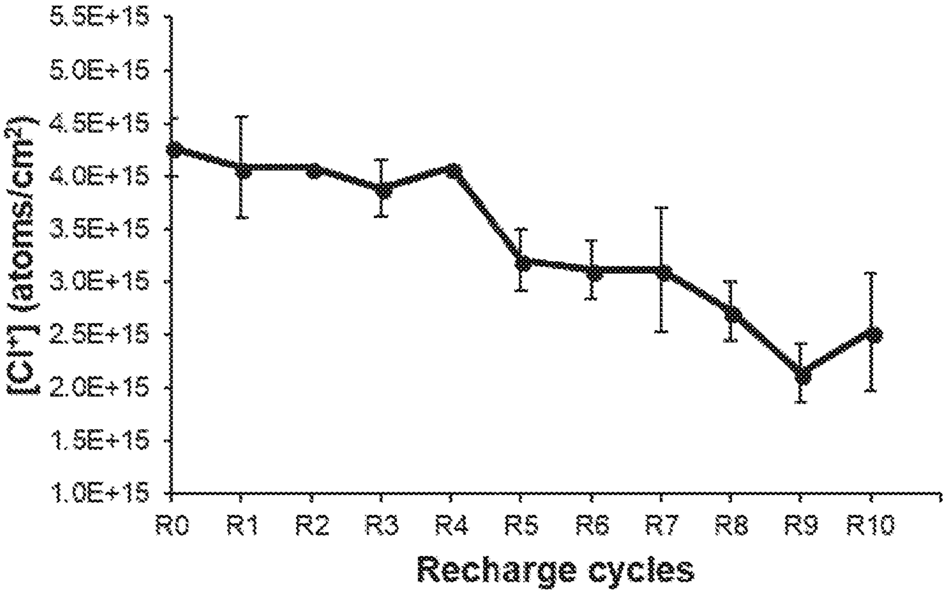

[Cl⁺] (atoms/cm²)
5.5E+15
5.0E+15
4.5E+15
4.0E+15
3.5E+15
3.0E+15
2.5E+15
2.0E+15
1.5E+15
1.0E+15
R0
R1
R2
R3
R4
R5
R6
R7
R8
R9
R10
Recharge cycles


*Figs. 5A-5B*

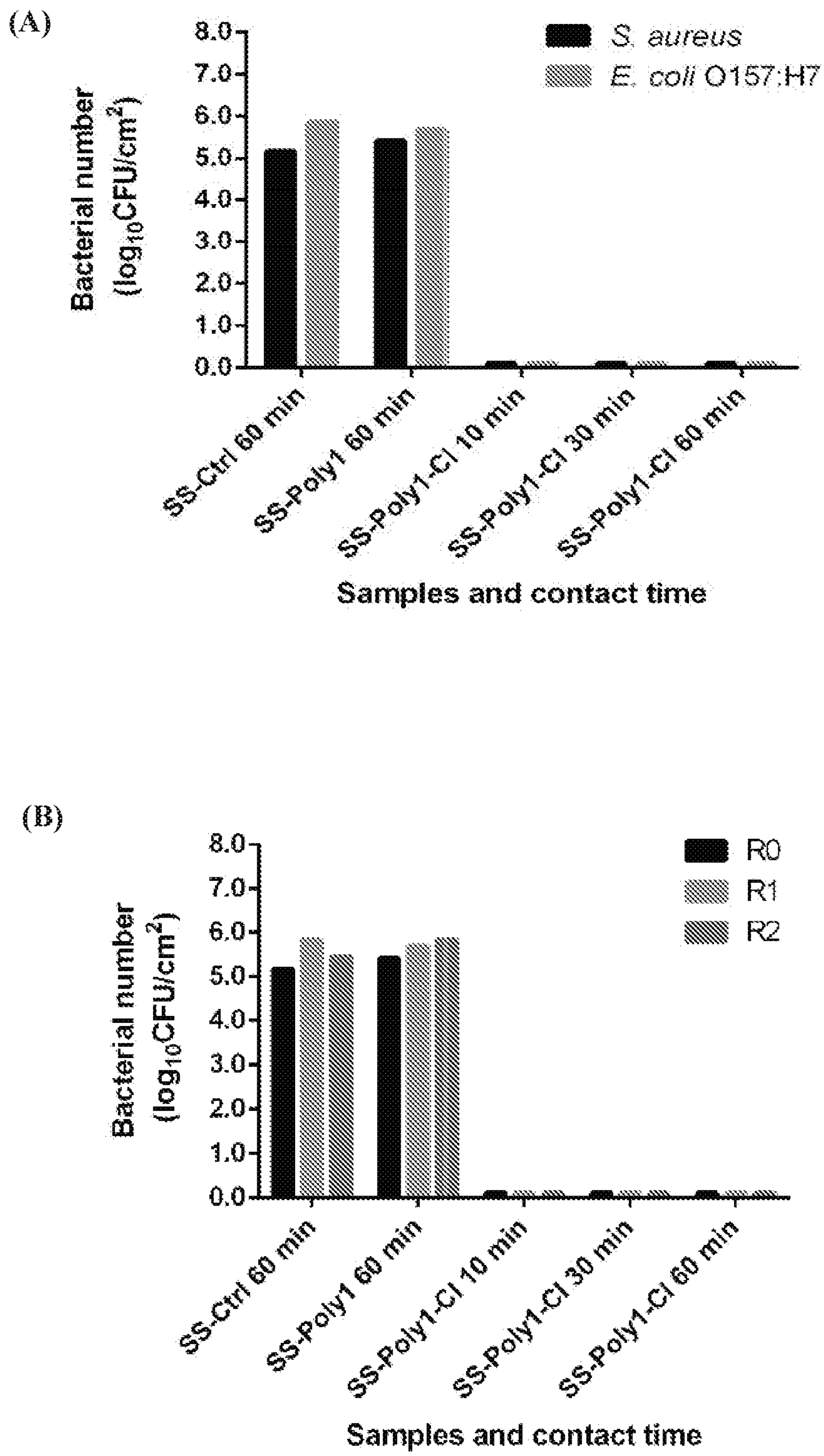
(A)
8.0
7.0
6.0
5.0
4.0
3.0
2.0
1.0
0.0
Bacterial number
($log_{10}CFU/cm^2$)
S. aureus
E. coli O157:H7
SS-Ctrl 60 min
SS-Poly1 60 min
SS-Poly1-Cl 10 min
SS-Poly1-Cl 30 min
SS-Poly1-Cl 60 min
Samples and contact time
(B)
8.0
7.0
6.0
5.0
4.0
3.0
2.0
1.0
0.0
Bacterial number
($log_{10}CFU/cm^2$)
R0
R1
R2
SS-Ctrl 60 min
SS-Poly1 60 min
SS-Poly1-Cl 10 min
SS-Poly1-Cl 30 min
SS-Poly1-Cl 60 min
Samples and contact time

*Figs. 6A-6B*

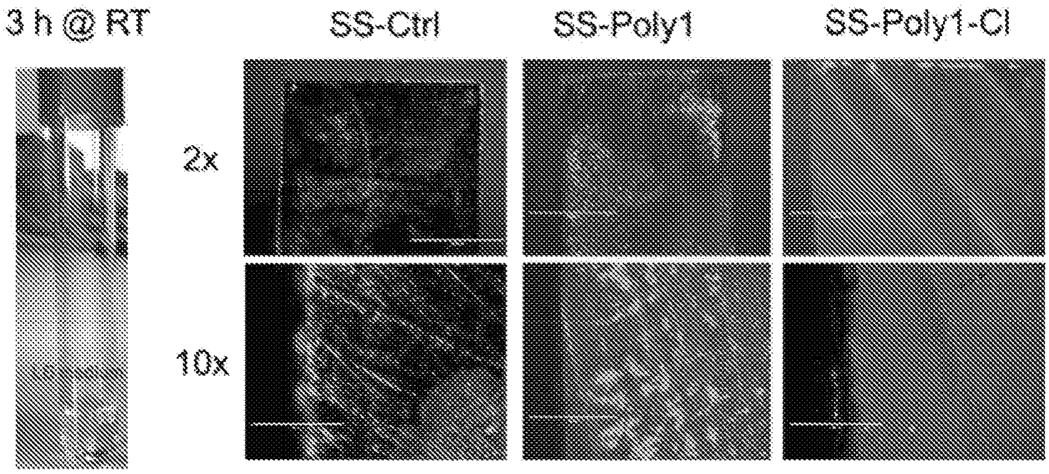
3 h @ RT
SS-Ctrl
SS-Poly1
SS-Poly1-Cl
2x
10x

*Fig. 7*

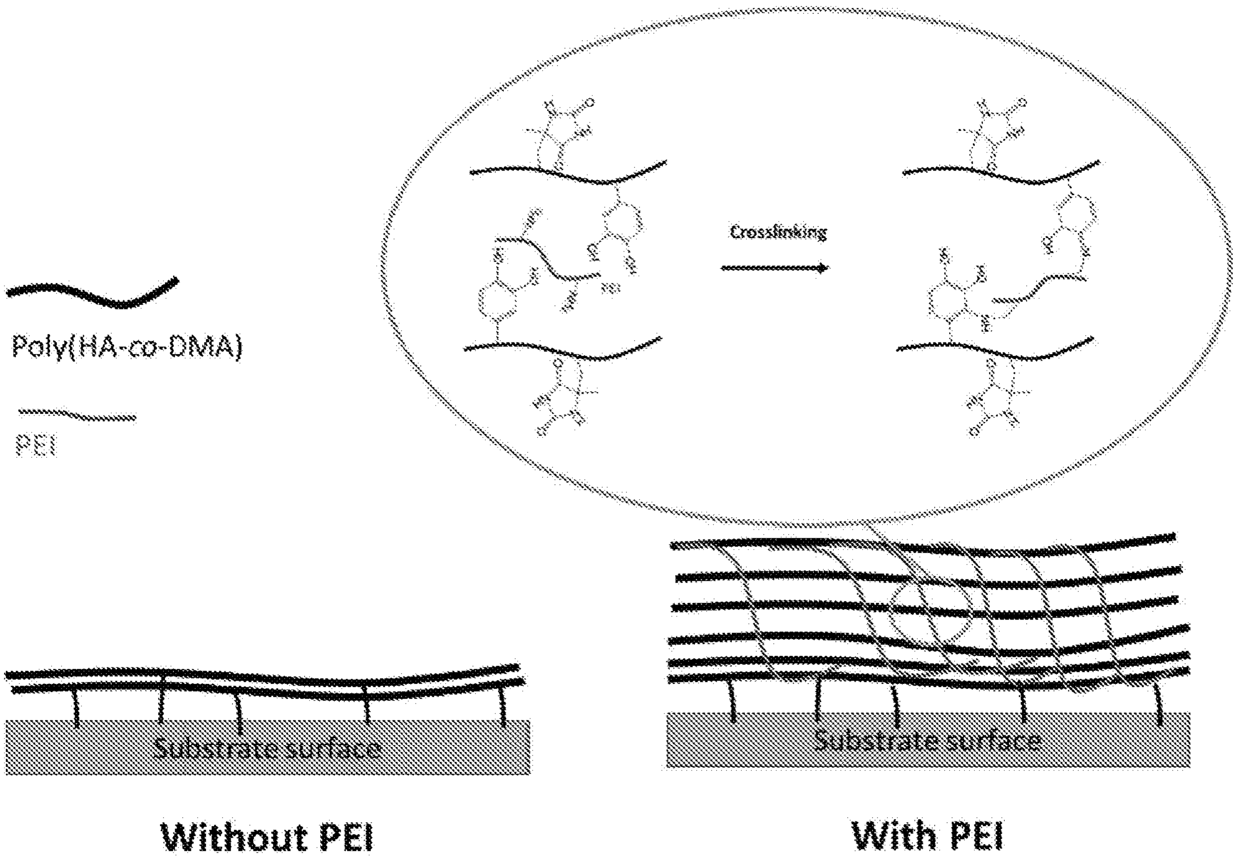
Crosslinking
Poly(HA-co-DMA)
PEI
Substrate surface
Substrate surface
Without PEI
With PEI

*Fig. 8A*

(B)

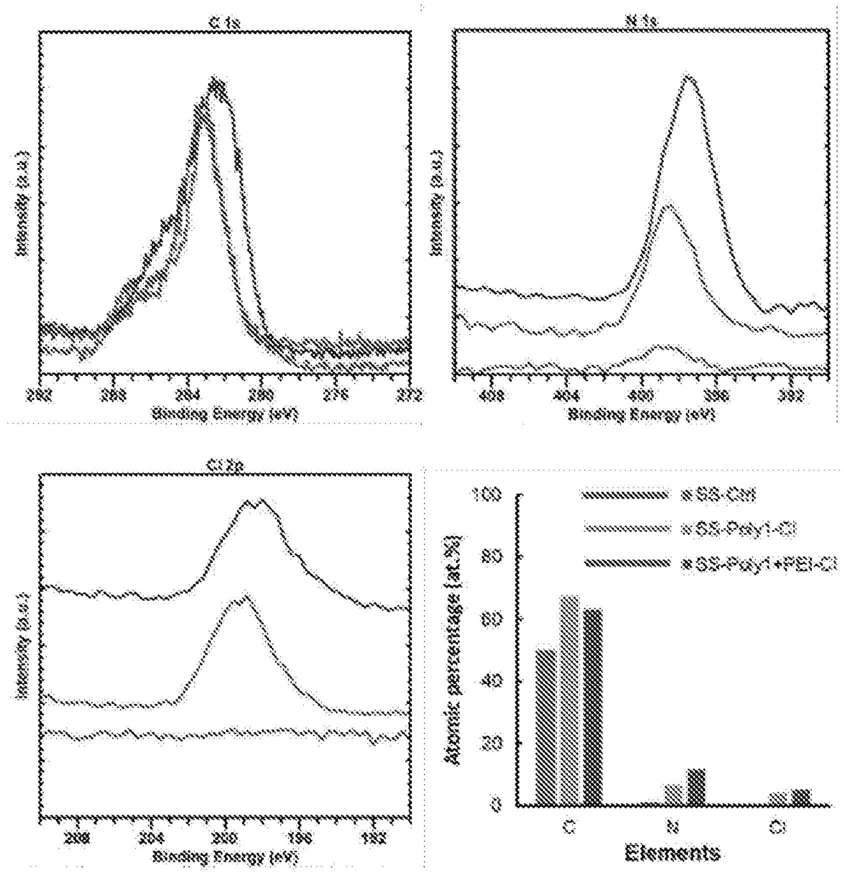
C 1s
N 1s
Cl 2p
Intensity (a.u.)
Binding Energy (eV)
Atomic percentage [at.%]
SS-Ctrl
SS-Poly1-Cl
SS-Poly1+PEI-Cl
C
N
Cl
Elements

(C)

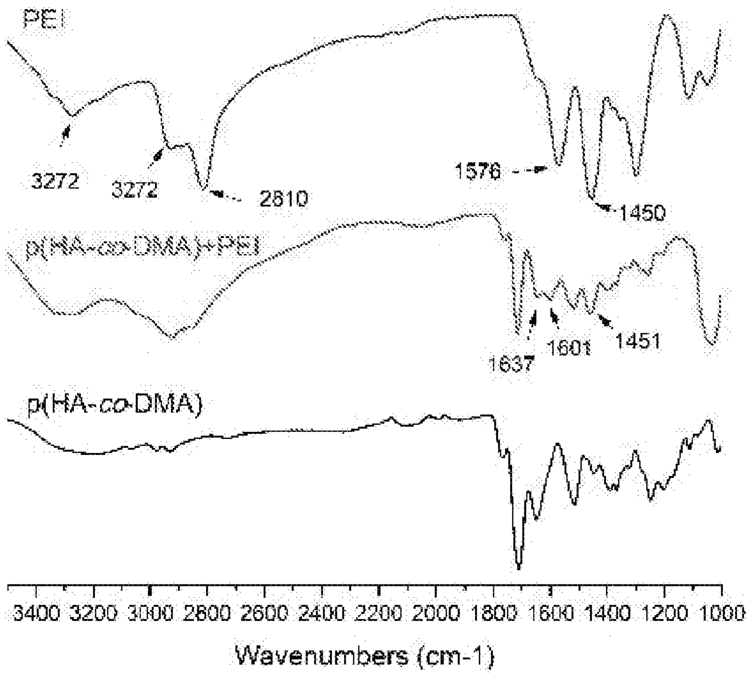
PEI
3272
3272
2810
1576
1450
p(HA-co-DMA)+PEI
1637
1601
1451
p(HA-co-DMA)
3400 3200 3000 2800 2600 2400 2200 2000 1800 1600 1400 1200 1000
Wavenumbers (cm-1)

***Figs. 8B-8C***

(D)

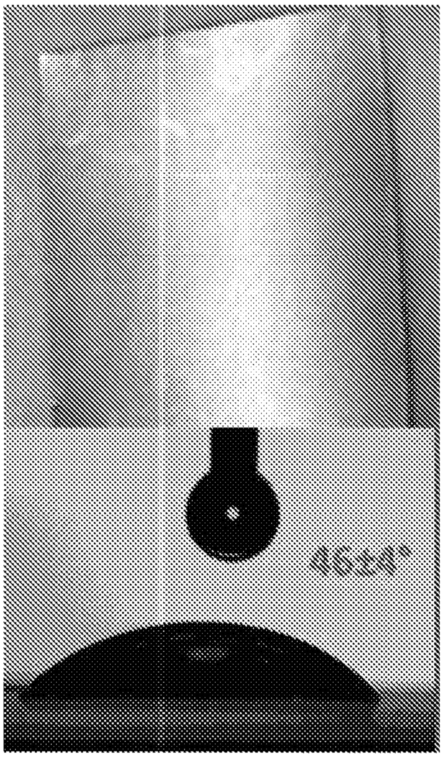
46±4°

(E)

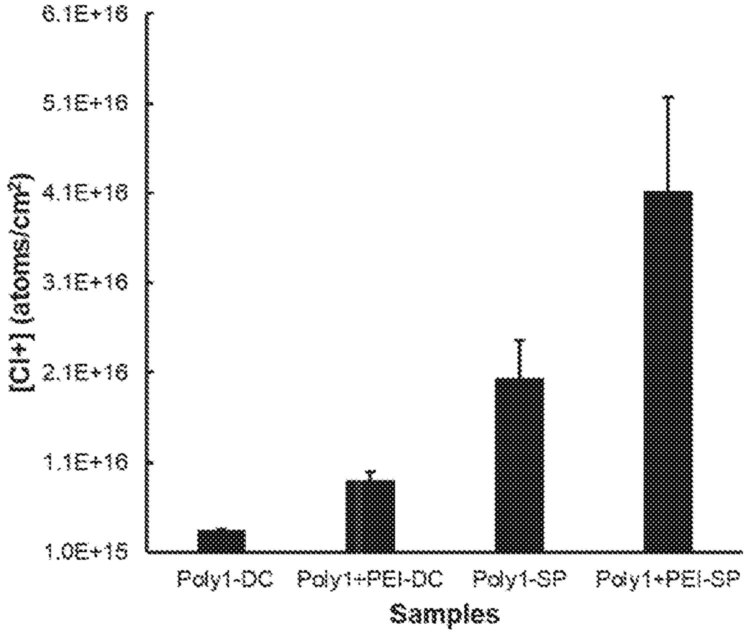
6.1E+16
5.1E+16
4.1E+16
3.1E+16
2.1E+16
1.1E+16
1.0E+15
[Cl+] (atoms/cm²)
Poly1-DC
Poly1+PEI-DC
Poly1-SP
Poly1+PEI-SP
Samples

*Figs. 8D-8E*

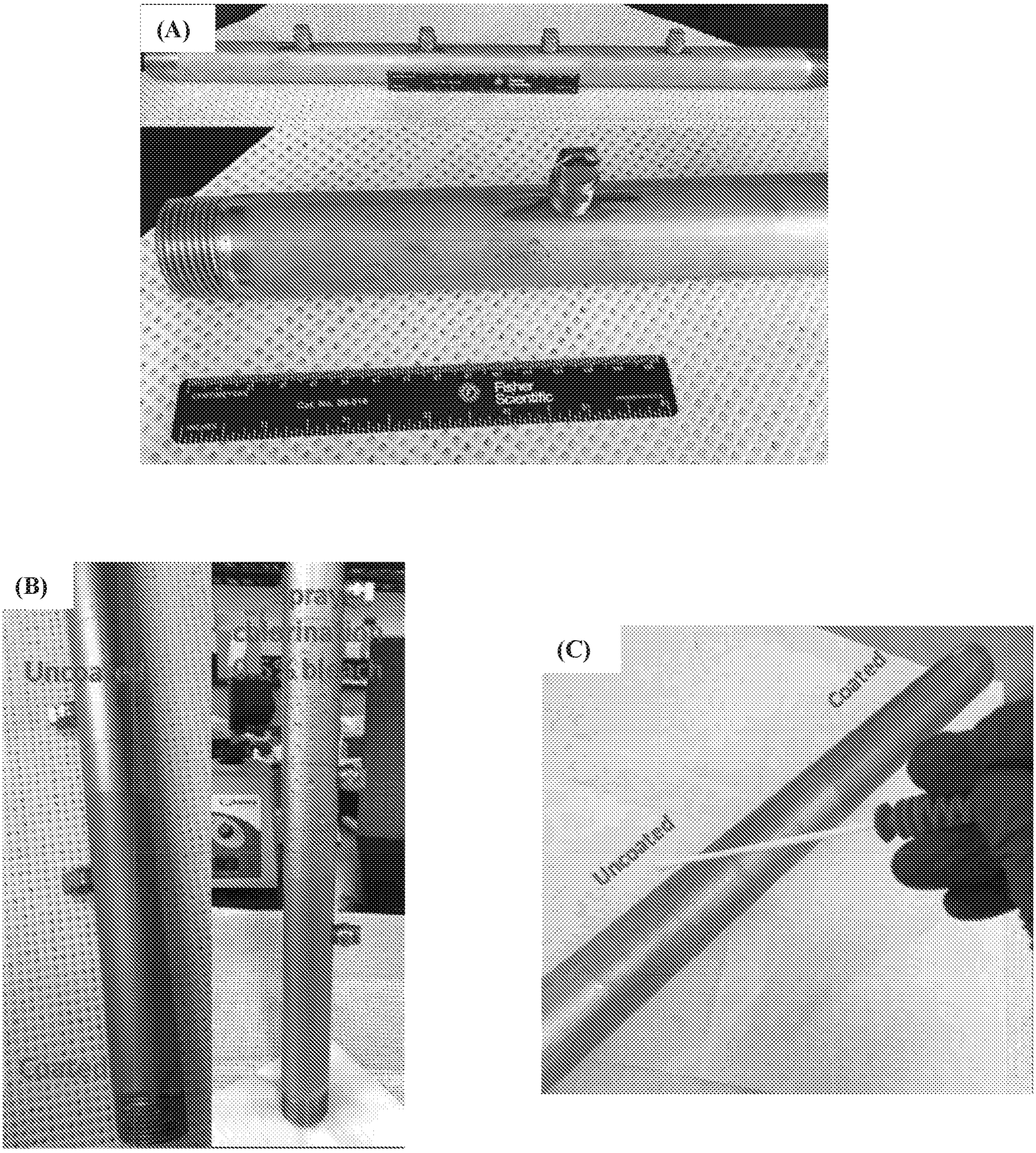


*Figs. 9A-9C*

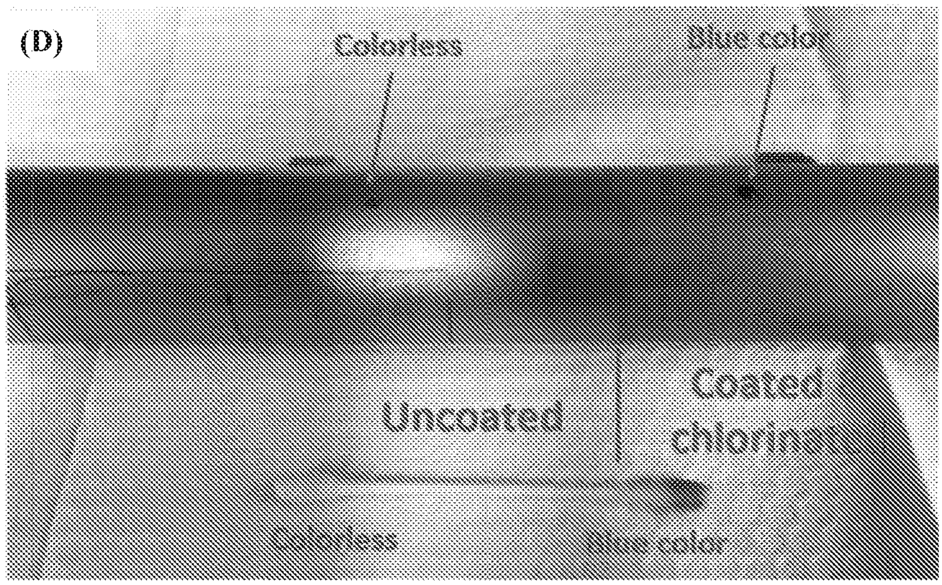
(D)
Colorless
Blue color
Uncoated
Coated chlorinat
Colorless
Blue color

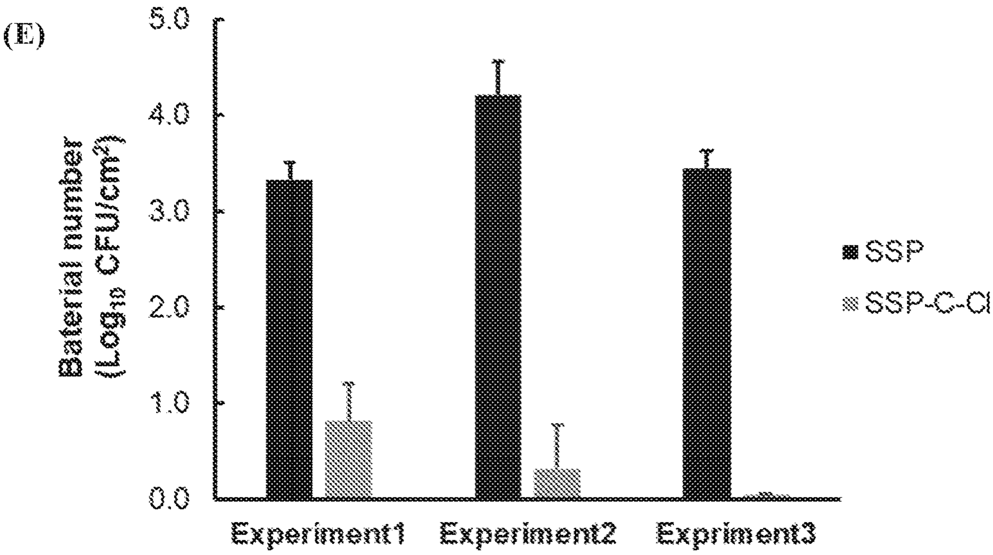
(E)
5.0
4.0
3.0
2.0
1.0
0.0
Baterial number (Log10 CFU/cm2)
SSP
SSP-C-Cl
Experiment1
Experiment2
Expriment3

*Figs. 9D-9E*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2003044376 A
- US 20140343192 A1, Cochran
- US 5763548 A, Matyjaszewski
- US 6538091 B, Matyjaszewski
- US 20180327627 A


### Non-patent literature cited in the description


- **SCALLAN et al.** Foodborne Illness Acquired in the United States - Major Pathogens. *Emerging Infectious Diseases*, 2011, vol. 17 (1), 7-15
- **TYCO INTEGRATED SECURITY**. Recall: The Food Industry's Biggest Threat To Profitability. *Food Safety Magazine*, 2012
- **LARSEN et al.** Persistence of Foodbome Pathogens and Their Control in Primary and Secondary Food Production Chains. *Food Control*, 2014, vol. 44, 92-109
- **MUHTEREM-UYAR et al.** Environmental Sampling for Listeria Monocytogenes Control in Food Processing Facilities Reveals Three Contamination Scenarios. *Food Control*, 2015, vol. 51, 94-107
- **GORMAN et al.** A Study of Cross-Contamination of Food-Borne Pathogens in the Domestic Kitchen in the Republic of Ireland. *International Journal of Food Microbiology*, 2002, vol. 76 (1-2), 143-150
- **KANEKO et al.** Bacterial Contamination in the Environment of Food Factories Processing Ready-to-Eat Fresh Vegetables. *Journal of Food Protection*, 1999, vol. 62 (7), 800-804
- **CARRASCO et al.** Cross-Contamination and Recontamination by Salmonella in Foods: A Review. *Food Research International*, 2012, vol. 45 (2), 545-556
- **RYU et al.** Biofilm Formation by Escherichia Coli O157:H7 on Stainless Steel: Effect of Exopolysaccharide and Curli Production on its Resistance to Chlorine. *Applied and Environmental Microbiology*, 2005, vol. 71 (1), 247-254
- **CORCORAN et al.** Commonly Used Disinfectants Fail to Eradicate Salmonella Enterica Biofilms from Food Contact Surface Materials. *Applied and Environmental Microbiology*, 2014, vol. 80 (4), 1507-1514
- **FAILLE et al.** Sporulation of Bacillus spp. Within Biofilms: A Potential Source of Contamination in Food Processing Environments. *Food Microbiology*, 2014, vol. 40, 64-74
- **KUMAR et al.** Significance of Microbial Biofilms in Food Industry: A Review. *International Journal of Food Microbiology*, 1998, vol. 42 (1), 9-27
- **BROOKS et al.** Biofilms in the Food Industry: Problems and Potential Solutions. *International Journal of Food Science & Technology*, 2008, vol. 43 (12), 2163-2176
- **ZHANG et al.** Development of a Portable Electrolytic Sanitizing Unit for the Production of Neutral Electrolysed Water. *LWT - Food Science and Technology*, 2017, vol. 82, 207-215
- **ZHAO et al.** Efficacy of Low Concentration Neutralised Electrolysed Water and Ultrasound Combination for Inactivating Escherichia Coli ATCC 25922, Pichia Pastoris GS115 and Aureobasidium Pullulans 2012 on Stainless Steel Coupons. *Food Control*, 2017, vol. 73, 889-899
- **BASTARRACHEA et al.** Antimicrobial Food Equipment Coatings: Applications and Challenges. *Annual Review of Food Science and Technology*, 2015, vol. 6 (1), 97-118
- **BELLUCO et al.** Silver as Antibacterial Toward Listeria Monocytogenes. *Frontiers in Microbiology*, 2016, vol. 7, 307
- **CHAITIEMWONG et al.** Survival of Listeria Monocytogenes on a Conveyor Belt Material With or Without Antimicrobial Additives. *International Journal of Food Microbiology*, 2010, vol. 142 (1), 260-263
- **DONG et al.** Chemical Insights into Antibacterial N-Halamines. *Chemical Reviews*, 2017, vol. 117 (6), 4806-4862
- **HUI et al.** Antimicrobial N-Halamine Polymers and Coatings: A Review of Their Synthesis, Characterization, and Applications. *Biomacromolecules*, 2013, vol. 14 (3), 585-601
- **DEMIR et al.** Polymeric Antimicrobial N-Halamine-Surface Modification of Stainless Steel. *Industrial & Engineering Chemistry Research*, 2017, vol. 56 (41), 11773-11781

- **BASTARRACHEA et al.** Development of Antimicrobial Stainless Steel via Surface Modification With N-Halamines: Characterization of Surface Chemistry and N-Halamine Chlorination. *Journal of Applied Polymer Science*, 2013, vol. 127 (1), 821-831
- **BASTARRACHEA et al.** Antimicrobial Coatings with Dual Cationic and N-Halamine Character: Characterization and Biocidal Efficacy. *Journal of Agricultural and Food Chemistry*, 2015, vol. 63 (16), 4243-4251
- **QIAO et al.** N-Halamine Modified Thermoplastic Polyurethane with Rechargeable Antimicrobial Function for Food Contact Surface. *RSC Advances*, 2017, vol. 7 (3), 1233-1240
- **KOCER et al.** N-Halamine Copolymers for Use in Antimicrobial Paints. *ACS Applied Materials & Interfaces*, 2011, vol. 3 (8), 3189-3194
- **LEE et al.** Mussel-Inspired Surface Chemistry for Multifunctional Coatings. *Science*, 2007, vol. 318 (5849), 426-430
- **LEE et al.** A Reversible Wet/Dry Adhesive Inspired by Mussels and Geckos. *Nature*, 2007, vol. 448, 338
- **GLASS et al.** Enhanced Reversible Adhesion of Dopamine Methacrylamide-Coated Elastomer Microfibrillar Structures Under Wet Conditions. *Langmuir*, 2009, vol. 25 (12), 6607-6612
- **RYU et al.** High-Strength Carbon Nanotube Fibers Fabricated by Infiltration and Curing of Mussel-Inspired Catecholamine Polymer. *Advanced Materials*, 2011, vol. 23 (17), 1971-1975
- **TIAN et al.** Realizing Ultrahigh Modulus and High Strength of Macroscopic Graphene Oxide Papers Through Crosslinking of Mussel-Inspired Polymers. *Advanced Materials*, 2013, vol. 25 (21), 2980-2983
- **RYU et al.** Catechol-Functionalized Chitosan/Pluronic Hydrogels for Tissue Adhesives and Hemostatic Materials. *Biomacromolecules*, 2011, vol. 12 (7), 2653-2659
- **MOAD et al.** The Chemistry of Radical Polymerization - Second Fully Revised Edition. Elsevier Science Ltd., 2006
- **MOAD et al.** Living Radical Polymerization by the Raft Process- a First Update. *Australian Journal of Chemistry*, 2006, vol. 59, 669-92
- **MOAD et al.** Living Radical Polymerization by the Raft Process- a Second Update. *Australian Journal of Chemistry*, 2009, vol. 62 (11), 1402-72
- **MOAD et al.** Living Radical Polymerization by the Raft Process- a Third Update. *Australian Journal of Chemistry*, 2012, vol. 65, 985-1076
- **SKEY et al.** Facile one pot synthesis of a range of reversible addition-fragmentation chain transfer (RAFT) agents.. *Chemical Communications*, 2008, vol. 35, 4183-85
- **DAVIS et al.** Atom Transfer Radical Polymerization of tert-Butyl Acrylate and Preparation of Block Copolymers. *Macromolecules*, 2000, vol. 33, 4039-4047
- **MATYJASZEWSKI et al.** Atom Transfer Radical Polymerization. *Chemical Reviews*, 2001, vol. 101, 2921-2990
- **CHAITIEMWONG et al.** Survival of Listeria monocytogenes on a Conveyor Belt Material With or Without Antimicrobial Additives. *International Journal of Food Microbiology*, 2010, vol. 142 (1), 260-263
- **CAO et al.** Polymeric N-Halamine Latex Emulsions for Use in Antimicrobial Paints. *ACS Applied Materials & Interfaces*, 2009, vol. 1 (2), 494-504